(19) Europäisches Patentamt
European Patent Office
Office européen des brevets

(11) **EP 4 504 545 B1**

(12) # EUROPÄISCHE PATENTSCHRIFT

(45) Veröffentlichungstag und Bekanntmachung des Hinweises auf die Patenterteilung:
**05.08.2026 Patentblatt 2026/32**

(21) Anmeldenummer: **23710277.7**

(22) Anmeldetag: **07.03.2023**

(51) Internationale Patentklassifikation (IPC):
***B60L 7/18*** *(2006.01)* ***B60L 15/32*** *(2006.01)*
***B60L 53/65*** *(2019.01)* ***B60L 53/66*** *(2019.01)*
***B60L 53/68*** *(2019.01)* ***B60L 58/12*** *(2019.01)*
***B60L 58/13*** *(2019.01)* ***B60L 58/15*** *(2019.01)*

(52) Gemeinsame Patentklassifikation (CPC):
**B60L 7/18; B60L 7/10; B60L 15/32; B60L 53/65; B60L 53/66; B60L 53/68; B60L 58/12; B60L 58/13; B60L 58/15;** B60L 2200/28; B60L 2200/40; B60L 2240/12; B60L 2240/62; B60L 2240/622; B60L 2240/64; (Forts.)

(86) Internationale Anmeldenummer:
**PCT/EP2023/055685**

(87) Internationale Veröffentlichungsnummer:
**WO 2023/194024 (12.10.2023 Gazette 2023/41)**

(54) **VERFAHREN FÜR ELEKTRISCH ANTREIBBARES FAHRZEUG, INSBESONDERE NUTZFAHRZEUG, VERFAHREN FÜR FAHRZEUGEXTERNEN SERVER, COMPUTERPROGRAMM, COMPUTERLESBARES MEDIUM, STEUERGERÄT, ELEKTRISCH ANTREIBBARES FAHRZEUG, FAHRZEUGEXTERNER SERVER**

METHOD FOR AN ELECTRICALLY DRIVABLE VEHICLE, IN PARTICULAR A UTILITY VEHICLE, METHOD FOR A VEHICLE-EXTERNAL SERVER, COMPUTER PROGRAM, COMPUTER-READABLE MEDIUM, CONTROLLER, ELECTRICALLY DRIVABLE VEHICLE, AND VEHICLE-EXTERNAL SERVER

PROCÉDÉ POUR UN VÉHICULE À ENTRAÎNEMENT ÉLECTRIQUE, EN PARTICULIER UN VÉHICULE UTILITAIRE, PROCÉDÉ POUR UN SERVEUR EXTERNE AU VÉHICULE, PROGRAMME INFORMATIQUE, SUPPORT LISIBLE PAR ORDINATEUR, DISPOSITIF DE COMMANDE, VÉHICULE À ENTRAÎNEMENT ÉLECTRIQUE ET SERVEUR EXTERNE AU VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **08.04.2022 DE 102022108592**

(43) Veröffentlichungstag der Anmeldung:
**12.02.2025 Patentblatt 2025/07**

(73) Patentinhaber: **ZF CV Systems Global GmbH**
**3006 Bern (CH)**

(72) Erfinder:
- **HESEDING, Johannes**
  **30499 Hannover (DE)**
- **MEYER-RÖSSLER, Philip**
  **31180 Giesen (DE)**
- **PYTTLIK, Daniel**
  **31559 Hohnhorst (DE)**
- **RASCH, Daniel**
  **31157 Sarstedt (DE)**
- **RICKE, Janik**
  **31311 Uetze (DE)**
- **SCHAPER, Mark**
  **30519 Hannover (DE)**

(74) Vertreter: **Rabe, Dirk-Heinrich**
**ZF CV Systems Hannover GmbH**
**Am Lindener Hafen 21**
**30453 Hannover (DE)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(56) Entgegenhaltungen:
**EP-A1- 3 523 704**
**JP-A- 2018 129 973**
**US-A1- 2018 178 668**
**US-B2- 10 392 003**
**US-B2- 8 116 973**

(52) Gemeinsame Patentklassifikation (CPC): (Forts.)
B60L 2240/642; B60L 2240/66; B60L 2240/68; B60L 2240/70; B60L 2240/72; B60L 2250/10; B60L 2250/16

## Beschreibung

Die Erfindung betrifft ein Verfahren für ein elektrisch antreibbares Fahrzeug, insbesondere Nutzfahrzeug. Die Erfindung betrifft auch ein Verfahren für einen fahrzeugexternen Server, ein Computerprogramm und/oder ein computerlesbares Medium, ein Steuergerät, ein elektrisch antreibbares Fahrzeug, insbesondere Nutzfahrzeug, und einen fahrzeugexternen Server.

Die Erfindung bezieht sich insbesondere auf elektrisch antreibbare Fahrzeuge (Battery Electric Vehicle, BEV), insbesondere Nutzfahrzeuge, die einen Typ II-A Test gemäß 'Regelung Nr. 13 der Wirtschaftskommission für Europa der Vereinten Nationen (UNECE) - Einheitliche Vorschriften für die Typgenehmigung von Fahrzeugen der Klassen M, N, und O hinsichtlich der Bremsen [2016/194]' (ECE R 13) erfüllen müssen. Dabei ist ein Halten einer Geschwindigkeit von 30 km / h über eine 6 km lange Gefällestrecke mit 7 % Steigung ohne Einsatz der Reibbremsen gefordert. Darüber hinaus sind leistungsstarke Retarder für konventionelle Fahrzeuge vorgesehen, um den Bremsenverschleiß zu minimieren und längere Gefällestrecken bei höheren Geschwindigkeiten zu ermöglichen.

Der Typ II-A Test kann von BEVs erfüllt werden, wenn der Batterieladezustand die Aufnahme der durch die Rekuperation rückgewonnenen Energie erlaubt. Anderenfalls kann die Erfüllung des Typ II-A Test nicht garantiert werden. Damit muss eine Energiespeichervorrichtung durch eine Nutzbremsung eines elektrischen Antriebs aufladbar sein, ohne dass die Gefahr besteht, die Energiespeichervorrichtung zu überladen und so zu schädigen. Daher sind für BEVs gesonderte Maßnahmen zu implementieren: Option 1 umfasst eine Hinzunahme einer weiteren verschleißfreien Dauerbremse (Bremswiderstand, Retarder o.ä.), Option 2 umfasst eine Implementation eines Bremsleistungsschätzers (Brake Performance Estimators) der in zwei Warnschwellen einen Fahrer warnt, sofern eine Reibbremse bestimmte Verzögerungen nicht mehr garantieren kann. Option 3 sieht die Implementierung intelligenter Energiemanagement-Funktionen vor, die prädiktiv arbeiten und den Batterieladezustand gegebenenfalls in einem geeigneten Bereich halten. Dafür kann es notwendig sein, dass die Energiespeichervorrichtung an einer fahrzeugexternen Ladestation nur bis zu einem bestimmbaren Ziel-Ladezustand geladen wird.

Es ist denkbar, einen Puffer vorzuhalten, also eine Differenz zwischen der maximalen Kapazität der Energiespeichervorrichtung und dem Ziel-Ladezustand einzustellen. Die Notwendigkeit eines Puffervorhalts ist jedoch nur in sehr wenigen Fällen überhaupt notwendig. Es ist daher nicht sinnvoll einen solchen Puffer als vorbestimmten Offset der möglichen Batterienutzung zu verschwenden. Dies ist insbesondere relevant, da dies die Kosten für dieselbe Reichweite des Fahrzeugs signifikant erhöhen würden und das Fahrszenario einer zu vollen Batterie nach Stand des Wissens in der Realität typischerweise eher selten auftritt.

DE 10 2020 001 782 A1 offenbart ein Verfahren zum Laden einer Traktionsbatterie eines batterieelektrischen Kraftfahrzeugs (BEV). Vor dem Laden der Traktionsbatterie an einer Ladeeinrichtung kann eine Position des Kraftfahrzeugs bestimmt werden. Unter Berücksichtigung der Umgebungstopologie, Verkehrsdaten und der Verkehrsdichte, die bspw. von einem Navigationssystem und einer Kommunikationsschnittstelle zur Verfügung gestellt werden können, kann prognostiziert werden, wo, wann, über welche Zeiträume und in welcher Menge Energie, z. B. beim Bremsen im Verkehr oder an einem Gefälle, zum Laden der Traktionsbatterie rekuperiert werden kann. Eine Steuereinheit ist dazu ausgebildet, ein Laden der Traktionsbatterie auf einen Soll-Ladezustand beim Laden an einer stationären Ladeeinrichtung, z. B. einer Ladesäule, zu steuern. Die Steuereinheit kann hierfür auf verschiedene Informationen zugreifen, z. B. von der Standortbestimmungseinrichtung, dem Navigationssystem und/oder der Kommunikationsschnittstelle. Es ist möglich, dass falls keine relevante Gefällstrecke auf der geplanten Route existiert und keine Rekuperationsenergie beim Bremsen verfügbar sein wird, der Soll-Ladezustand bspw. auf maximal gesetzt wird. Falls es hingegen längere Gefällstrecken gibt, kann der Soll-Ladezustand auf einen niedrigeren Wert eingestellt werden, so dass die Rekuperation der Bremsenergie maximal ausgenutzt werden kann. Sofern bspw. die Route des Kraftfahrzeugs nicht bekannt ist, kann sicherheitshalber ein reduzierter Soll-Ladezustand bestimmt werden.

Die JP2018129973A offenbart eine Steuerung der endgültigen Ladekapazität einer Batterie durch ein externes Batterieladegerät des Fahrzeugs basierend auf Positionsinformationen zu einem Ladeort und Fahrzeugtypinformationen zu einem Fahrzeug.

Das grundsätzliche Problem für eine prädiktive Lösung wie in dem obigen Verfahren gemäß dem Stand der Technik liegt darin, dass die zu erwartende Energiebilanz, also der Energieverbrauch durch Fahren unter Berücksichtigung der Energierückgewinnung durch Rekuperation, im Fahrzeug nicht zuverlässig vorhersagbar ist. Auch eine beispielsweise eingegebene Route in ein Navigationssystem und die prädiktive Vorausberechnung eines Energieverbrauchs beim Fahren entlang der Route ist allein nicht zielführend, da das Folgen der Route jederzeit durch den Fahrer abgebrochen werden kann. Ebenso kann sich die für eine potenzielle Energie des Fahrzeugs maßgebliche Fahrzeugmasse jederzeit während der Fahrt, also entlang einer Route, ändern, wenn das Fahrzeug be- und/oder entladen wird.

Das Problem liegt dabei vor allem in der Datenverfügbarkeit und in der Rechenkraft im Fahrzeug aufgrund der Komplexität der Varianten in der Vorausberechnung.

Es sind weiterhin Lösungsansätze bekannt, bei denen in einer Fahrsituation beim Erkennen eines zu hohen Ladezustands der Energieverbrauch des Fahrzeugs temporär gesteigert wird, z.B. durch Hinzuschaltung von Verbrauchern oder durch das Erhöhen von Verlusten, beispielsweise durch das Betreiben eines Kompressors, einer Kühlung, eines Elektromotors an einem ineffizienten Betriebspunkt. Damit wird die Energiespeichervorrichtung künstlich geleert, um eine Nutzbremsung zu ermöglichen. Das künstliche Leeren der Energiespeichervorrichtung ist jedoch ineffizient und ökonomisch und ökologisch nachteilig.

Die nach ECE R 13 zulässige Option 1 eines Bremsleistungsschätzers ist nach derzeitigem Wissenstands aufwändig umzusetzen, da eine konkrete Vorhersage der möglichen Verzögerung der Reibbremsen auf einen Zielwert bzw. Zielwertschwelle zu vielen nicht bekannten Variablen unterliegt und daher schwer zu realisieren ist.

Der Erfindung liegt daher die Aufgabe zugrunde, den Stand der Technik zu bereichern und eine verbesserte Ermittlung eines Ziel-Ladezustands zu ermöglichen, und gleichzeitig zu vermeiden, dass der Energiespeicher künstlich geleert werden muss.

Die Aufgabe wird durch ein Verfahren nach Anspruch 1 sowie den Gegenständen nach den weiteren unabhängigen Ansprüchen gelöst. Die Unteransprüche geben bevorzugte Weiterbildungen der Erfindung an.

Gemäß der Erfindung wird ein Verfahren für ein elektrisch antreibbares Fahrzeug, welches als Nutzfahrzeug ausgebildet ist, mit einer Energiespeichervorrichtung und einem zur Nutzbremsung fähigen elektrischen Antrieb, wobei die Energiespeichervorrichtung während einer Nutzbremsung aufladbar ist und die Energiespeichervorrichtung an einer fahrzeugexternen Ladestation aufladbar ist, vorgeschlagen. Das Verfahren weist folgende Schritte auf: Ermitteln eines Ladestatus, wobei der Ladestatus die Information umfasst, ob die Energiespeichervorrichtung durch die fahrzeugexterne Ladestation geladen wird; Erfassen, in Abhängigkeit von dem Ladestatus, von einer das Fahrzeug, insbesondere Nutzfahrzeug, betreffender Fahrzeuginformation und einer die Position des Fahrzeugs, insbesondere Nutzfahrzeugs, betreffender Positionsinformation; Übermitteln der Fahrzeuginformation und der Positionsinformation an einen fahrzeugexternen Server; und Empfangen eines Ziel-Ladezustands von dem fahrzeugexternen Server.

Das elektrisch antreibbare Nutzfahrzeug wird im Folgenden als Fahrzeug bezeichnet. Die Energiespeichervorrichtung und der elektrische Antrieb sind derart eingerichtet, dass die Energiespeichervorrichtung einen elektrischen Strom für den elektrischen Antrieb bereitstellt, um das Fahrzeug anzutreiben. Der elektrische Antrieb ist dazu eingerichtet, das Fahrzeug durch eine Nutzbremsung zu verzögern, wobei bei einer Verzögerung des Fahrzeugs kinetische Energie des Fahrzeugs in elektrische Energie umgewandelt wird. Der elektrische Antrieb und die Energiespeichervorrichtung sind dazu eingerichtet, die durch die Nutzbremsung umgewandelte Energie in der Energiespeichervorrichtung zu speichern.

Die Energiespeichervorrichtung ist durch die fahrzeugexterne Ladestation aufladbar. Die fahrzeugexterne Ladestation und das Fahrzeug weisen jeweils eine entsprechende Schnittstelle auf, um das Fahrzeug bzw. dessen Energiespeichervorrichtung zum Laden der Energiespeichervorrichtung an die fahrzeugexterne Ladestation anzuschließen. Die fahrzeugexterne Ladestation kann hierfür beispielsweise eine stationäre oder mobile Ladesäule sein, ein Energiespeicher eines von dem Fahrzeug mitgeführten und/oder mitführbaren Anhängers, als Energiespeicher-Austauscheinrichtung oder als sonstige Vorrichtung zum Laden der Energiespeichervorrichtung. Die fahrzeugexterne Ladestation und das Fahrzeug sind dazu eingerichtet, die Energiespeichervorrichtung auf einen Ziel-Ladezustand aufzuladen. Der Ziel-Ladezustand kann beispielsweise durch einen Anteil der maximalen Kapazität bzw. eine maximalen Ladezustand der Energiespeichervorrichtung angegeben werden. Die Differenz aus maximalem Ladezustand und Ziel-Ladezustand wird als Puffer bezeichnet.

Zunächst wird der Ladestatus ermittelt. Der Ladestatus gibt an, ob die Energiespeichervorrichtung durch die fahrzeugexterne Ladestation geladen wird. Somit beginnt das Verfahren mit einem Erkennen, ob das Fahrzeug bzw. dessen Energiespeichervorrichtung durch die fahrzeugexterne Ladestation geladen wird. Das Laden des Fahrzeugs bzw. der Energiespeichervorrichtung erfolgt bis ein Ladezustand (State of Charge, SoC) der Energiespeichervorrichtung den Ziel-Ladezustand erreicht hat und/oder das Laden des Fahrzeugs unterbrochen wird. Um den Ladestatus zu ermitteln, kann das Fahrzeug eine Energiespeichersteuerungsvorrichtung aufweisen, die dazu eingerichtet ist, das Laden sowie das Entladen durch den Betrieb des Fahrzeugs zu verwalten.

Um den Ziel-Ladezustand zu bestimmen erfolgt ein Erfassen der Fahrzeuginformation bzw. Fahrzeuginformationen und der Positionsinformation, die jeweils an den fahrzeugexternen Server übermittelt werden. Das Erfassen der Fahrzeuginformation und der Positionsinformation erfolgt in Abhängigkeit von dem Ladestatus. Insbesondere kann das Erfassen der Fahrzeuginformationen und der Positionsinformation erfolgen, wenn das Fahrzeug beziehungsweise dessen Energiespeichervorrichtung geladen wird, und das Erfassen der Fahrzeuginformationen und der Positionsinformation kann unterbleiben, wenn das Fahrzeug nicht geladen wird. Alternativ oder zusätzlich können das Erfassen und Übermitteln der Fahrzeuginformationen und der Positionsinformation oder Teilen davon auch vor dem Laden erfolgen, um eine Verarbeitung durch den fahrzeugexternen Server vor dem Laden zu ermöglichen. Dadurch kann die Zeit an der Ladesäule verringert werden, da nicht erst bei dem Beginn des Ladens die Erfassung und Übermittlung der Daten erfolgt und somit der Ziel-Ladezustand eher übermittelt werden kann.

Die Fahrzeuginformation umfasst eine oder mehrere Informationen, die das Fahrzeug als solches betreffen und die Positionsinformation umfasst eine Information, die die Position bzw. den Ort beschreibt, an dem sich das Fahrzeug befindet. Die Fahrzeuginformation und die Positionsinformation sind zur Ermittlung des Ziel-Ladezustands geeignete Größen, die zur Ermittlung des Ziel-Ladezustands an den fahrzeugexternen Server übermittelt werden. Der fahrzeugexterne Server ermittelt anhand der Fahrzeuginformation und der Positionsinformation den Ziel-Ladezustand und übermittelt den Ziel-Ladezustand an das Fahrzeug. Alternativ oder zusätzlich kann der Ziel-Ladezustand an die fahrzeugexterne Ladestation übermittelt werden. Das Fahrzeug empfängt den Ziel-Ladezustand von dem fahrzeugexternen Server. Anhand des von dem Fahrzeug empfangenen Ziel-Ladezustands erfolgt das Laden der Energiespeichervorrichtung des Fahrzeugs bis der Ladezustand der Energiespeichervorrichtung den Ziel-Ladezustand erreicht. Damit erfolgt ein Laden der Energiespeichervorrichtung in Abhängigkeit von dem empfangenen Ziel-Ladezustand.

Die Erfindung hat erkannt, dass mit dem vorgeschlagenen Verfahren auch die Verwendung komplizierter Berechnungen des Ziel-Ladezustands durch den fahrzeugexternen Server sichergestellt werden kann, um so zu verhindern, dass die Energiespeichervorrichtung künstlich geleert werden muss und/oder die Rekuperationsfähigkeit eingeschränkt ist. Durch die Übermittlung der Fahrzeuginformation und der Positionsinformation an den fahrzeugexternen Server können optional verschiedene Parameter und/oder Informationen übermittelt werden, die ausgehend von einem Minimalansatz durch eine beliebig verfeinerbare Berechnung des Ziel-Ladezustands einen dynamischen Puffer, also einen sich während einer Fahrt des Fahrzeugs entlang einer Route einstellenden Puffer, absenken können. Damit ist ein besonders effektives Betreiben des Fahrzeugs und das Erzielen einer möglichst langen Reichweite gegeben. Damit ist eine kostengünstige und realisierbare Lösung für batterieelektrische Fahrzeuge ermöglicht, die den Typ II-A Test erfüllen müssen, denn es müssen keine weiteren Retarder vorgesehen werden und ein Bremsleistungsschätzer ist entbehrlich.

Vorzugsweise erfolgt das Erfassen der Fahrzeuginformation und der Positionsinformation, wenn die Energiespeichervorrichtung durch die fahrzeugexterne Ladestation geladen wird. Damit ist eine exakte und zeitlich aktuelle Erfassung der zum Ermitteln des Ziel-Ladezustands geeigneten Größen möglich. Optional können auch die Fahrzeuginformation und/oder die Positionsinformation erfasst werden, wenn die Energiespeichervorrichtung nicht durch die fahrzeugexterne Ladestation geladen wird, um ein Tracking zu ermöglichen und so das Ermitteln des Ziel-Ladezustands durch den fahrzeugexternen Server durch ein prädiktives Verfahren zu verbessern. Dabei können die Fahrzeuginformation und die Positionsinformation auch unmittelbar vor dem Laden erfasst werden.

Vorzugsweise umfasst die Fahrzeuginformation eine Fahrzeugkennung. In dieser Ausführungsform ist es möglich, dass die Fahrzeuginformation in einer Fahrzeugerkennung zusammengefasst werden kann beziehungsweise durch eine Fahrzeugkennung abbildbar ist. Damit ist eine effektive Übermittlung von dem Fahrzeug an den fahrzeugexternen Server möglich, da nicht alle Bestandteile der Fahrzeuginformation gesondert übertragen werden müssen, sondern die Übermittlung der Fahrzeugkennung ausreichend ist, um mit der Fahrzeugkennung verknüpfte Fahrzeugeigenschaften abzurufen.

Vorzugsweise umfasst das elektrisch antreibbare Fahrzeug bzw. Nutzfahrzeug eine Zugmaschine und einen Anhänger, wobei das Übermitteln der Fahrzeuginformation und der Positionsinformation an den fahrzeugexternen Server jeweils von der Zugmaschine und von dem Anhänger an den fahrzeugexternen Server erfolgt. Mit anderen Worten wird in jedem Segment des Fahrzeugs eine separate Datenerhebung durchgeführt. Alternativ oder zusätzlich umfasst das Übermitteln der Fahrzeuginformation und der Positionsinformation an den fahrzeugexternen Server ein Übermitteln von dem Anhänger an die Zugmaschine und von der Zugmaschine and den fahrzeugexternen Server. Mit anderen Worten können Daten, die zur Bestimmung und Verfeinerung des Ziel-Ladezustands (Ziel-SoC) benötigt werden, von lokal verbundenen Systemen innerhalb eines Fahrzeugsegments gesammelt werden. Besteht die Möglichkeit zum lokalen Datenaustausch zwischen Fahrzeugsegmenten, sammelt ein Segment die Daten. Anschließend werden die Daten an den fahrzeugexternen Server zur Berechnung des Ziel-Ladezustands übermittelt.

Das Verfahren weist ferner auf: Übermitteln von Routeninformation an den fahrzeugexternen Server. Zusätzlich weist das Verfahren ein Übermitteln einer zu einer Route gehörigen Beladungsinformation auf. Die Routeninformation und/oder Beladungsinformation umfassen optional Informationen eines Disponenten, die beispielsweise Ziele einer Fahrt und/oder Informationen zum Be- und/oder Entladen des Fahrzeugs umfassen. Durch die Beladungsinformation ist eine Anpassung des Ziel-Ladezustands durch Gewichtsinformationen möglich. Die Beladungsinformation kann dabei eine Information bezüglich der Differenz aus einem Soll- und einem Istzustand umfassen. Durch die Routeninformation und Beladungsinformation ist ein verbessertes Ermitteln des Ziel-Ladezustands durch den fahrzeugexternen Server möglich.

Vorzugsweise weist das Verfahren ferner auf: Empfangen eines Routenvorschlags und/oder eines Beladungsvorschlags von dem fahrzeugexternen Server. Durch das Empfangen von Routenvorschlägen und/oder Beladungsvorschlägen ist es möglich, dass beispielsweise vermieden wird, dass überhaupt eine Limitierung des Ziel-Ladezustands erforderlich ist, wenn eine dem Routenvorschlag entsprechende Route gefahren wird und/oder das Fahrzeug entsprechend dem Beladungsvorschlag be- und/oder entladen wird. Ferner ist damit eine Anpassung an aktuelle Gegebenheiten, beispielsweise die Verkehrssituation möglich, wobei dabei ein optimaler Verlauf einer Reserve des Ladezustands berücksichtigt wird.

Vorzugsweise ist dafür der Routenvorschlag und/oder der Beladungsvorschlag auf den Ziel-Ladezustand abgestimmt, um ein möglichst effizientes Laden und Betreiben des Fahrzeugs zu ermöglichen.

Vorzugsweise weist das Verfahren ferner auf: Empfangen eines inkompatiblen Routenvorschlags und/oder eines inkompatiblen Beladungsvorschlags von dem fahrzeugexternen Server, wobei ein Befolgen des inkompatiblen Routenvorschlags und/oder des inkompatiblen Beladungsvorschlags durch das Fahrzeug bzw. Nutzfahrzeug, eine Einschränkung der Fähigkeit des elektrischen Antriebs zur Nutzbremsung impliziert; Ermitteln der Fähigkeit des elektrischen Antriebs zur Nutzbremsung; Veranlassen einer Warnung und/oder Änderung eines Energieverbrauchs in Abhängigkeit von der Fähigkeit des elektrischen Antriebs zur Nutzbremsung. Die Fähigkeit des elektrischen Antriebs zur Nutzbremsung kann eingeschränkt sein, wenn die Energiespeichervorrichtung vollständig geladen ist, d. h. einen Ladezustand aufweist, der der maximalen Kapazität der Energiespeichervorrichtung entspricht. In dem Fall kann der elektrische Antrieb keine Nutzbremsung durchführen, ohne dass die Energiespeichervorrichtung zuvor insbesondere künstlich geleert werden muss. Damit ist die Fähigkeit des elektrischen Antriebs zur Nutzbremsung eingeschränkt. Diese Ausführungsform hat erkannt, dass der fahrzeugexterne Server inkompatible Routenvorschläge und/oder Beladungsvorschläge ermitteln kann und diese an das Fahrzeug übertragen kann. Damit kann ein Fahrer des Fahrzeugs gewarnt werden, sollte das Fahrzeug dem inkompatiblen Routenvorschlag und/oder Beladungsvorschlag folgen. Zusätzlich oder alternativ kann eine Änderung, insbesondere eine Erhöhung, eines Energieverbrauchs veranlasst werden, falls die Fähigkeit des elektrischen Antriebs zur Nutzbremsung eingeschränkt ist. Damit wird die Energiespeichervorrichtung geleert und die Fähigkeit des elektrischen Antriebs zur Nutzbremsung kann wieder hergestellt werden. Dies kann die Effizienz des Fahrens mindern, aber einen Schaden abwenden.

Vorzugsweise weist das Verfahren ferner auf: Veranlassen einer Warnung eines Energieverbrauchs in Abhängigkeit der Fähigkeit des elektrischen Antriebs zur Nutzbremsung, wobei die Warnung einen angepassten Routenvorschlag unter Berücksichtigung der Position des Fahrzeugs, insbesondere Nutzfahrzeugs umfasst, wobei der Routenvorschlag derart angepasst ist, dass eine minimale Änderung eines Energieverbrauchs in Abhängigkeit der Fähigkeit des elektrischen Antriebs zur Nutzbremsung erforderlich ist. Damit kann ein Fahrer des Fahrzeugs über eine mit erhöhter Energieeffizienz zu befahrende Route informiert werden. Dem Fahrer wird im Rahmen der Warnmeldung ein erneuter Routenvorschlag übermittelt, der die aktuelle Fahrzeugposition berücksichtigt, und eine möglichst geringe Vernichtung von Ladeenergie ermöglicht, wobei zum Zwecke der Berechnung des aktualisierten Routenvorschlags die Kommunikation mit dem Server aufgenommen werden kann.

Vorzugsweise weist das Verfahren ferner auf: Übermitteln einer Ladeanfrage an die fahrzeugexterne Ladestation, um das Laden der Energiespeichervorrichtung durch die fahrzeugexterne Ladestation gemäß dem empfangenen Ziel-Ladezustand zu ermöglichen. Optional umfasst die Ladeanfrage eine den Ziel-Ladezustand umfassende Information.

Vorzugsweise erfolgt das Übermitteln und das Empfangen über eine fahrzeugseitige Mobilfunkschnittstelle. Damit ist ein besonders effektives Übermitteln und Empfangen von Informationen beziehungsweise Daten möglich. Optional kann das Übermitteln und Empfangen über eine von der Mobilfunkschnittstelle verschiedene insbesondere kabellose Kommunikationsschnittstelle erfolgen, beispielsweise über ein WLAN. Eine Zugmaschine und/oder ein Anhänger weist optional eine als Mobilfunkschnittstelle ausgeführte Kommunikationsschnittstelle auf.

Vorzugsweise weist das Verfahren ferner auf: Empfangen einer Mehrzahl von Ziel-Ladezuständen von dem fahrzeugexternen Server, wobei jeder der Ziel-Ladezustände zu jeweils einer von mehreren fahrzeugexternen Ladestationen in einer Umgebung des Fahrzeugs, insbesondere Nutzfahrzeugs, korrespondiert. Die Mehrzahl der Ziel-Ladezustände kann gespeichert werden, um beispielsweise in dem Fall, dass keine Netzverfügbarkeit auf einem Routenabschnitt mit einer oder mehreren der fahrzeugexternen Ladestationen verfügbar ist, ein Laden entsprechend des jeweiligen Ziel-Ladezustands möglich ist. Die Speicherung der ermittelten und empfangenen Ziel-Ladezustände im Fahrzeug kann beispielsweise für die nächsten Ladestationen in einem Umkreis zum Fahrzeug oder entlang einer wahrscheinlichen Route als Rückfallebene für den Fall der Nichtverfügbarkeit von einem Mobilfunknetz gespeichert werden.

Gemäß einem Aspekt der Erfindung wird ein Verfahren für einen fahrzeugexternen Server bereitgestellt. Das Verfahren weist folgende Schritte auf: Empfangen einer Fahrzeuginformation und einer Positionsinformation von einem elektrisch antreibbaren Fahrzeug, insbesondere Nutzfahrzeug, wobei die Fahrzeuginformation das elektrisch antreibbare Fahrzeug, insbesondere Nutzfahrzeug betrifft, und wobei die Positionsinformation eine Position des Fahrzeugs, insbesondere Nutzfahrzeugs betrifft; Ermitteln eines Ziel-Ladezustands basierend auf der Fahrzeuginformation und der Positionsinformation; und Übermitteln des Ziel-Ladezustands an das elektrisch antreibbare Fahrzeug, insbesondere Nutzfahrzeug.

Der fahrzeugexterne Server kann als eine zentrale Verarbeitungseinheit (Cloud) bezeichnet werden. Der fahrzeugexterne Server ist dazu eingerichtet, den Ziel-Ladezustand zu ermitteln. Die Erfindung hat erkannt, dass das Ermitteln eines zuverlässigen und genauen Ziel-Ladezustand aufgrund der notwendigen komplexen Berechnungen durch einen fahrzeugexternen Server durchzuführen ist. Damit ist es möglich, dass diverse Berechnungsmethoden zum Ermitteln des Ziel-Ladezustands angewendet werden können. Ferner ist es möglich, dass diverse Parameter und/oder Informationen, die zum Ermitteln des Ziel-Ladezustands geeignet sind, betrachtet werden können. Das erfindungsgemäße Verfahren verlagert somit die Berechnung des Ziel-Ladezustands von dem Fahrzeug hin zu dem fahrzeugexternen Server. Der fahrzeugexterne Server kann beispielsweise sogar mit einer Brute-Force-Methode sicherstellen, dass der Ziel-Ladezustand derart eingestellt ist, dass unabhängig von dem Weg, den das Fahrzeug nehmen kann, und einer möglichen Beladung des Fahrzeugs und/oder einer Änderung der Beladung während des Fahrens, die Rekuperationsfähigkeit nicht eingeschränkt ist.

Um den Ziel-Ladezustand zu ermitteln, empfängt der fahrzeugexterne Server von dem Fahrzeug die Fahrzeuginformation und die Positionsinformation. Anhand der Fahrzeuginformation und der Positionsinformation berechnet der fahrzeugexterne Server den Ziel-Ladezustand. Dabei werden die Fahrzeuginformation und die Positionsinformation verwendet, um den Energieverbrauch und/oder den Energierückgewinn durch Rekuperation beim Fahren des Fahrzeugs nach dem Laden der Energiespeichervorrichtung an der fahrzeugexternen Ladestation zu ermitteln. Damit wird der Ladezustand der Energiespeichervorrichtung modelliert und der Ziel-Ladezustand kann entsprechend der Modellierung derart eingestellt werden, dass ein künstliches Leeren und/oder eine eingeschränkte Rekuperationsfähigkeit der Energiespeichervorrichtung vermieden werden.

Der durch den fahrzeugexternen Server ermittelte Ziel-Ladezustand wird an das elektrisch antreibbare Fahrzeug übermittelt, um gemäß dem Ziel-Ladezustand an einer fahrzeugexterne Ladestation aufgeladen zu werden.

Vorzugsweise umfasst die Fahrzeuginformation eine Fahrzeugkennung, wobei das Ermitteln des Ziel-Ladezustands unter Berücksichtigung von durch den Server anhand der Fahrzeugkennung ermittelbarer folgender Fahrzeugdaten erfolgt: Fahrzeugtyp, Fahrzeugmasse, Leistungsfähigkeit eines elektrischen Antriebs, Modell eines Antriebsstrangs, maximale Ladekapazität, Ladeleistungskennlinie, Wirkungsgradkette, Fahrwiderstandsbeiwerte, Fahrzeuggeometriedaten. Durch den Empfang der Fahrzeuginformation, die eine Fahrzeugkennung umfasst, kann der Server anhand der Fahrzeugkennung eine Menge für die Ermittlung des Ziel-Ladezustands geeigneter Fahrzeugdaten ermitteln. Die so ermittelbaren Fahrzeugdaten können beispielsweise auf dem Server gespeichert sein und so durch den fahrzeugexternen Server anhand der Fahrzeugkennung abrufbar sein. Optional können die ermittelbaren Fahrzeugdaten auf einem von dem fahrzeugexternen Server verschiedenen und mit dem fahrzeugexternen Server verbundenen bzw. verbindbaren Flottenmanagementsystem gespeichert sein, und durch den fahrzeugexternen Server anhand der Fahrzeugkennung von dem Flottenmanagementsystem abgerufen werden. Damit ist anhand der Fahrzeugkennung ein effektives Empfangen und Ermitteln von für die Berechnung des Ziel-Ladezustands geeigneten Fahrzeugdaten möglich. Beispielsweise umfassen die ermittelbaren Fahrzeugdaten Fahrzeugtyp, Fahrzeugmasse, Leistungsfähigkeit eines elektrischen Antriebs, Modell eines Antriebsstrangs, maximale Ladekapazität, Ladeleistungskennlinie, Wirkungsgradkette, Fahrwiderstandsbeiwerte, Fahrzeuggeometriedaten. Der Fahrzeugtyp impliziert beispielsweise Informationen bezüglich einer Leistung, einer Ladekapazität der Energiespeichervorrichtung, einer Rekuperationsleistung, einer zulässigen Gesamtmasse. Der Fahrzeugtyp kann auch Informationen bezüglich der im Folgenden genannten Fahrzeugdaten implizieren. Die Fahrzeugmasse umfasst beispielsweise eine Information bezüglich des zulässigen Gesamtgewichts und/oder einer Anhängelast. Die Leistungsfähigkeit des elektrischen Antriebs umfasst beispielsweise eine Information, mit welcher Leistung das Fahrzeug antreibbar ist und bezüglich der Rekuperationsleistung. Die Ladeleistungskennlinie umfasst beispielsweise Informationen zu einer Batterieladeleistung und/oder einer Batteriekapazität. Die Wirkungsgradkette umfasst beispielsweise Informationen bezüglich Energieumwandlungsmöglichkeiten des Fahrzeugs, einschließlich möglicher optionaler Energieumwandlungsmöglichkeiten, die sich durch das Hinzuschalten von Verbrauchern und/oder Ändern von Betriebsparametern ergeben. Die Fahrwiderstandsbeiwerte umfassen beispielsweise insbesondere Informationen, aus denen sich eine Radwiderstandsleistung, eine Steigungswiderstandsleistung, eine Beschleunigungswiderstandsleistung und/oder eine Luftwiderstandsleistung ermitteln lassen. Die Fahrwiderstandsbeiwerte können beispielsweise durch Betriebsparameter anpassbar sein. Beispielsweise kann ein Luftwiderstandsbeiwert durch eine aktiv veränderbare Anordnung von Luftwiderstandselementen wie Luftwiderstandsklappen änderbar sein. Die Fahrzeuggeometriedaten umfassen Informationen, aus denen sich der Luftwiderstand ergibt. Damit ist anhand der Fahrzeugkennung und anhand der durch die Fahrzeugkennung ermittelbaren Fahrzeugdaten eine vorteilhafte Verfeinerung der Berechnung des Ziel-Ladezustands möglich.

Vorzugsweise erfolgt das Ermitteln des Ziel-Ladezustands anhand eines kinematischen Modells des Fahrzeugs, insbesondere Nutzfahrzeugs. Das kinematische Modell ist ein Modell zur numerischen Simulation für von dem Fahrzeug befahrbare Routen. Das Fahrzeug wird anhand der empfangenen Fahrzeuginformation modelliert. Die befahrbaren Routen werden anhand der Positionsinformation bestimmt. Mit anderen Worten fährt das modellierte Fahrzeug in der Simulation potenzielle Routen ab unter Beachtung physikalischer Gegebenheiten, optional statistisch erfasster und/oder prognostizierbarer meteorologischer Gegebenheiten sowie verkehrstechnischer Gegebenheiten wie Geschwindigkeitslimit und/oder einem Soll-Geschwindigkeitsprofil, ab. Dabei werden Ladezustandskurven ermittelt. Optional wird zur Simulation eine Beschleunigung und/oder Verzögerung zur Erzielung vorbestimmter Geschwindigkeiten berücksichtigt, insbesondere in Abhängigkeit von der Zeit und/oder einer jeweiligen Strecke bzw. Route anhand von Kartendaten. Mit dem kinematischen Modell wird der Ziel-Ladezustand ermittelt und ermöglicht so eine zuverlässige Bestimmung des Ziel-Ladezustands, um das Fahrzeug an der fahrzeugexternen Ladestation entsprechend zu laden. Alternativ oder zusätzlich ist der Einsatz von maschinellem Lernen möglich, wobei beispielsweise aus einer historischen Erfassung und/oder Modellierung der Ziel-Ladezustand ermittelt wird.

Vorzugsweise erfolgt das Ermitteln des Ziel-Ladezustands unter Berücksichtigung von durch den Server anhand der Positionsinformation ermittelbarer Strecken und/oder Fahrprofilverläufe, anhand von Wetterdaten, anhand von Verkehrsinformation, anhand von in einer Umgebung des Fahrzeugs, insbesondere Nutzfahrzeug befindlicher weiterer Ladestationen. Anhand der Positionsinformation kann der fahrzeugexterne Server die oben genannten Merkmale ermitteln. Die derart ermittelbaren Merkmale können von dem fahrzeugexternen Server verwendet werden, um das Ermitteln des Ziel-Ladezustands unter Berücksichtigung von einem oder mehreren der Merkmale zu verbessern. Anhand der Positionsinformation kann der fahrzeugexterne Server beispielsweise mit Kartendaten, Strecken und/oder Fahrprofilverläufe, die durch das Fahrzeug befahrbar sind, ermitteln, um eine Vielzahl möglicher Routen bzw. Strecken betrachten zu können. Zu jeder der Routen wird eine Ladezustandskurve ermittelt und festgestellt, ob die Ladezustandskurve einer vorbestimmten Bedingung genügt. Beispielsweise, ob der der Ladezustandskurve entsprechende Ladezustand höchstens die maximale Kapazität der Energiespeichervorrichtung annimmt. Verkehrsinformationen umfassen beispielsweise Daten zu der aktuellen Verkehrslage, beispielsweise Stau. Wetterdaten umfassen beispielsweise Informationen bezüglich Temperatur und/oder Wind, die in einer Umgebung des Fahrzeugs herrschen, im statischen Mittel erfasst sind oder aktuell zum Zeitpunkt der Berechnung für den Zeitpunkt des Passierens prognostiziert sind. Anhand der Positionsinformation sind in der Umgebung des Fahrzeugs befindliche Ladestationen ermittelbar. Dabei ist es insbesondere möglich, dass die anhand der Positionsinformation ermittelbaren Merkmale mit den anhand der Fahrzeugkennung ermittelbaren Fahrzeugdaten verknüpft werden. Insbesondere ist es möglich, dass ein anhand der Fahrzeugkennung ermittelbarer Luftwiderstandsbeiwert mit Wetterdaten verknüpft wird, wobei die Wetterdaten Daten bezüglich des Windes umfassen, um die Auswirkung von Gegenwind, Rückenwind und/oder Seitenwind auf die Effizienz des Fahrens zu berücksichtigen. Beispielsweise kann eine anhand der Positionsinformation in einer Umgebung des Fahrzeugs vorherrschende Temperatur mit einer anhand der Fahrzeugkennung ermittelbaren Information bezüglich der Energiespeichervorrichtung verknüpft werden, um temperaturabhängige Effekte, die die Kapazität und/oder die Leistung der Energiespeichervorrichtung beeinflussen, zu berücksichtigen. Damit ist anhand der Positionsinformation und anhand der durch die Positionsinformation ermittelbaren Merkmale eine vorteilhafte Verfeinerung der Berechnung des Ziel-Ladezustand möglich.

Vorzugsweise wird das Ermitteln des Ziel-Ladezustands unter Berücksichtigung eines bestimmten Szenarios ermittelt, wobei das Szenario das Fahren entlang einer Strecke mit einem Gefälle und mit einer Geschwindigkeit umfasst. Damit kann die Erfüllung des Typ II-A-Test sichergestellt werden, wenn die Strecke, das Gefälle und die Geschwindigkeit entsprechend angepasst sind. Das Szenario kann ferner ein geeignetes Abbruchkriterium für die Vorausberechnung des Ziel-Ladezustands sein und so eine obere Schranke des Ziel-Ladezustands definieren. Anhand des Szenarios wird eine Ladezustandskurve ermittelt, aus der der Ziel-Ladezustand ermittelbar ist.

Vorzugsweise weist das Verfahren ferner auf: Ermitteln eines Routenvorschlags und/oder eines Beladungsvorschlags, und Übermitteln des Routenvorschlags und/oder eines Beladungsvorschlags an das elektrisch antreibbare Fahrzeug, insbesondere Nutzfahrzeug.

Vorzugsweise erfolgt das Ermitteln des Routenvorschlags und/oder des Beladungsvorschlags derart, dass der ermittelte Ziel-Ladezustand zu einem einer maximalen Ladekapazität entsprechenden Ladezustand einer Energiespeichervorrichtung des Fahrzeugs, insbesondere Nutzfahrzeug, führt. Diese Ausführungsform hat erkannt, dass der Ziel-Ladezustand unterhalb der maximalen Ladekapazität der Energiespeichervorrichtung des Fahrzeugs liegen kann, wenn beispielsweise wegen einer Bergabfahrt vorauszusehen ist, dass das Fahrzeug durch Rekuperation weitere Energie gewinnen wird und die Energiespeichervorrichtung durch Nutzbremsung derart laden wird, dass die maximale Ladekapazität während der Fahrt erreicht wird. Damit führt der Ziel-Ladezustand dazu, dass die maximale Ladekapazität erreicht wird. Eine den Ladezustand entlang der Route gemäß dem Routenvorschlag zusammen mit Beladungsvorschlag entsprechende Ladezustandskurve überschreitet die maximale Ladekapazität nicht.

Vorzugsweise erfolgt das Ermitteln des Ziel-Ladezustands durch künstliche Intelligenz unterstützt und/oder unter Berücksichtigung eines Risiko-Gewichtungsfaktors. Das Ermitteln des Ziel-Ladezustand durch künstliche Intelligenz ermöglicht beispielsweise ein effektives Einbeziehen vorheriger ermittelter Ziel-Ladezustände, also das Einbeziehen historischer Daten. Die Berücksichtigung eines Risiko-Gewichtsfaktors ermöglicht eine effektive Betrachtung verschiedener Szenarien und/oder verschiedener Routen, die durch das Fahrzeug befahrbar sind. Dabei können beispielsweise Routen, die nicht gefahren werden sollen oder können, beispielsweise aufgrund der Fahrzeugmasse und/oder Fahrzeughöhe, ignoriert und/oder schwach gewichtet werden. Sollte ein dynamischer Puffer nötig sein, wird keine Reichweite verschenkt, da im Laufe der Fahrt ein Ladezustand von 100 % erreicht wird. Damit können Energie und Kosten gespart werden, da weniger Energie von der fahrzeugexternen Ladestation bezogen werden muss.

Vorzugsweise weist das Verfahren ferner auf: Ermitteln und/oder Empfangen einer Flotteninformation von einem Flottenmanagementsystem, wobei das Ermitteln des Ziel-Ladezustands unter Berücksichtigung der Flotteninformation erfolgt. Die Flotteninformation werden aus dem Flottenmanagementsystem zum fahrzeugexternen Server übertragen. Die Flotteninformation kann beispielsweise Vorschläge von Routen von einem Disponenten unter Berücksichtigung vorgegebener Ziele und/oder Teilziele umfassen. Das Flottenmanagementsystem kann dabei ein insbesondere von dem Disponenten betriebene System zum Koordinieren und Verwalten einer Flotte von Fahrzeugen sein.

Gemäß einem Aspekt der Erfindung wird ein Computerprogramm und/oder ein computerlesbares Medium bereitgestellt. Das Computerprogramm und/oder das computerlesbare Medium umfassen Befehle, die bei der Ausführung des Programms bzw. der Befehle durch einen Computer diesen veranlassen, das Verfahren gemäß der Erfindung und/oder Schritte davon durchzuführen. Optional umfasst das Computerprogramm und/oder das computerlesbare Medium Befehle, die bei der Ausführung des Programms bzw. der Befehle durch einen Computer diesen veranlassen, die als vorteilhaft oder optional beschriebenen Verfahrensschritte durchzuführen, um einen damit verbundenen technischen Effekt zu erzielen.

Gemäß einem Aspekt der Erfindung wird ein Steuergerät für ein elektrisch antreibbares Fahrzeug bzw. Nutzfahrzeug, mit einer Energiespeichervorrichtung und einem zur Nutzbremsung fähigen elektrischen Antrieb bereitgestellt, wobei die Energiespeichervorrichtung während einer Nutzbremsung aufladbar ist und die Energiespeichervorrichtung an einer fahrzeugexternen Ladestation aufladbar ist. Das Steuergerät ist dazu eingerichtet ist, das Verfahren für ein elektrisch antreibbares Fahrzeug, insbesondere Nutzfahrzeug, gemäß der Erfindung durchzuführen. Optional ist das Steuergerät dazu eingerichtet, die als vorteilhaft oder optional beschriebenen Verfahrensschritte durchzuführen, um einen damit verbundenen technischen Effekt zu erzielen.

Vorzugsweise weist das Steuergerät eine Fahrzeugschnittstelle, eine Datenverarbeitungsvorrichtung und eine Kommunikationsschnittstelle zur Kommunikation mit einem fahrzeugexternen Server auf. Die Fahrzeugschnittstelle ermöglicht eine Kommunikation mit dem Fahrzeug, um Fahrzeuginformation abzufragen bzw. zu ermitteln. Die Kommunikationsschnittstelle ist zur Kommunikation mit dem fahrzeugexternen Server eingerichtet. Damit ermöglicht die Kommunikationsschnittstelle das Senden zu dem und Empfangen von dem fahrzeugexternen Server. Vorzugsweise weist die Kommunikationsschnittstelle eine Mobilfunkschnittstelle auf.

Gemäß einem Aspekt der Erfindung wird ein elektrisch antreibbares Fahrzeug bzw. Nutzfahrzeug, mit einer Energiespeichervorrichtung und einem zur Nutzbremsung fähigen elektrischen Antrieb und mit einem Steuergerät gemäß der Erfindung, bereitgestellt. Dabei ist die Energiespeichervorrichtung während einer Nutzbremsung aufladbar und die Energiespeichervorrichtung ist an einer fahrzeugexternen Ladestation aufladbar. Optional ist das Steuergerät des Fahrzeugs und/oder das Fahrzeug dazu eingerichtet, die als vorteilhaft oder optional beschriebenen Verfahrensschritte durchzuführen, um einen damit verbundenen technischen Effekt zu erzielen.

Gemäß einem Aspekt der Erfindung wird ein fahrzeugexterner Server bereitgestellt. Der fahrzeugexterne Server ist dazu eingerichtet, das Verfahren für einen fahrzeugexternen Server gemäß der Erfindung durchzuführen. Optional ist der fahrzeugexterne Server dazu eingerichtet, die als vorteilhaft oder optional beschriebenen Verfahrensschritte durchzuführen, um einen damit verbundenen technischen Effekt zu erzielen.

Weitere Vorteile und Merkmale der Erfindung sowie deren technische Effekte ergeben sich aus den Figuren und der Beschreibung der in den Figuren gezeigten bevorzugten Ausführungsformen. Dabei zeigen

Fig. 1 eine schematische Darstellung eines Ablaufschemas eines Verfahrens gemäß einer Ausführungsform der Erfindung;

Fig. 2 eine schematische Darstellung einer Übersicht eines Fahrzeugs, insbesondere Nutzfahrzeugs, gemäß einer Ausführungsform der Erfindung, einer fahrzeugexternen Ladestation und eines fahrzeugexternen Servers gemäß einer Ausführungsform der Erfindung;

Fig. 3 eine schematische Darstellung eines Fahrzeugs, insbesondere Nutzfahrzeugs, gemäß einer weiteren Ausführungsform der Erfindung;

Fig. 4 eine schematische Darstellung eines fahrzeugexternen Servers gemäß einer Ausführungsform der Erfindung; und

Fig. 5 eine schematische Ladekurve und vier exemplarische Ladezustandskurven einer Energiespeichervorrichtung eines Fahrzeugs, insbesondere Nutzfahrzeugs.

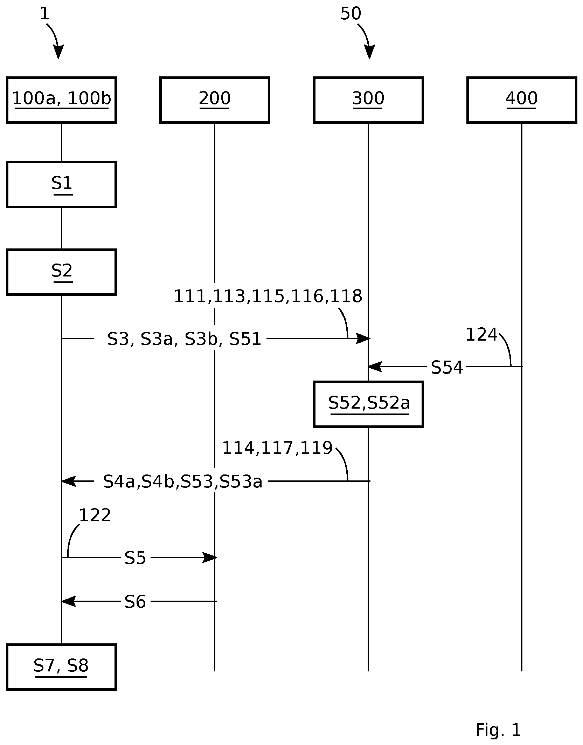

Figur 1 zeigt eine schematische Darstellung eines Ablaufschemas eines Verfahrens 1, 50 gemäß einer Ausführungsform der Erfindung. Insbesondere zeigt Figur 1 ein Verfahren 1 für ein elektrisch antreibbares Fahrzeug 100a, insbesondere Nutzfahrzeug 100b, mit einer Energiespeichervorrichtung 20 und einem zur Nutzbremsung NB fähigen elektrischen Antrieb 21, wobei die Energiespeichervorrichtung 20 während einer Nutzbremsung NB aufladbar ist und die Energiespeichervorrichtung 20 an einer fahrzeugexternen Ladestation 200 aufladbar ist. Figur 1 zeigt auch ein Verfahren 50 für einen fahrzeugexternen Server 300.

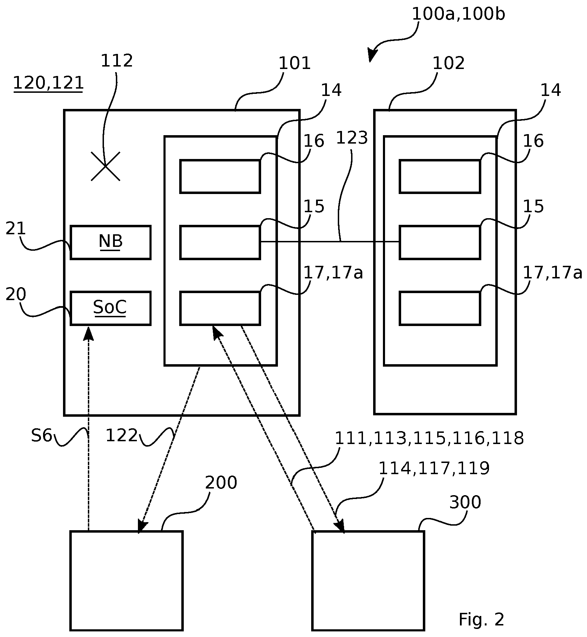

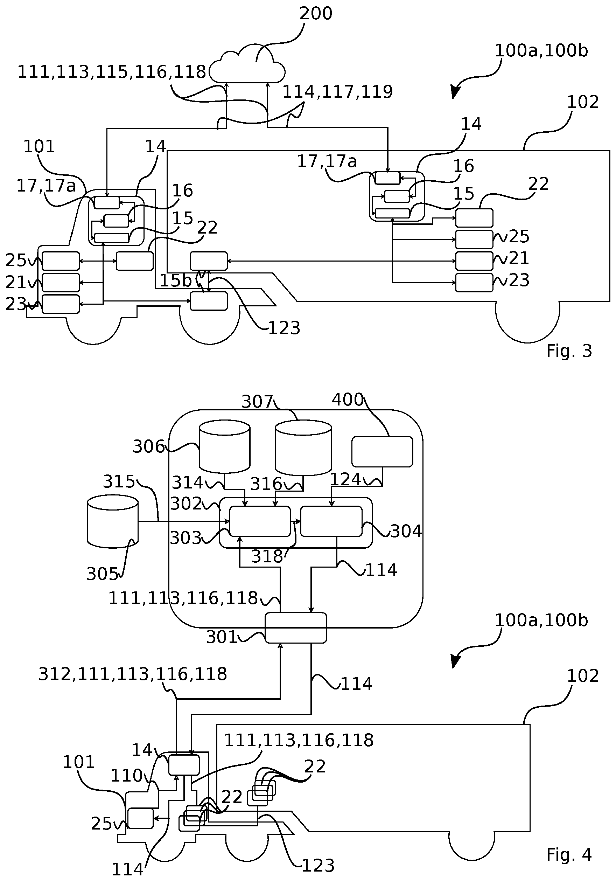

Das Fahrzeug 100a, insbesondere Nutzfahrzeug 100b, wird im Folgenden als Fahrzeug 100a, 100b bezeichnet. Das Fahrzeug 100a, 100b ist mit Bezug zu Figuren 2 und 3 genauer beschrieben.

In Figur 1 beginnt das Verfahren 1 für das Fahrzeug 100a, 100b mit einem Ermitteln S1 eines Ladestatus 110, wobei der Ladestatus 110 die Information umfasst, ob die Energiespeichervorrichtung 20 durch die fahrzeugexterne Ladestation 200 geladen wird. Der Ladestatus 110 kann somit angeben, dass die Energiespeichervorrichtung 20 durch die fahrzeugexterne Ladestation 200 geladen wird, oder dass die Energiespeichervorrichtung 20 durch die fahrzeugexterne Ladestation 200 nicht geladen wird. Es kann also der Zustand erkennt werden, dass das Fahrzeug 100a, 100b geladen wird.

Es folgt ein Erfassen S2, in Abhängigkeit von dem Ladestatus 110, von einer das Fahrzeug 100a, 100b, betreffender Fahrzeuginformation 111 und einer die Position 112 des Fahrzeugs 100a, 100b, betreffender Positionsinformation 113. Das Erfassen S2 der Fahrzeuginformation 111 und der Positionsinformation 113 erfolgt, wenn die Energiespeichervorrichtung 20 durch die fahrzeugexterne Ladestation 200 geladen wird. Die Fahrzeuginformation 111 umfasst dabei eine Fahrzeugkennung 115.

Es folgt ein Übermitteln S3 der Fahrzeuginformation 111 und der Positionsinformation 113 an einen fahrzeugexternen Server 300. Das Übermitteln S3 der Fahrzeuginformation 111 und der Positionsinformation 113 an den fahrzeugexternen Server 300 erfolgt entweder jeweils von der Zugmaschine 101 und von dem Anhänger 102 an den fahrzeugexternen Server 300 (siehe Figur 3). Alternativ umfasst das Übermitteln S3 der Fahrzeuginformation 111 und der Positionsinformation 113 an den fahrzeugexternen Server 300 ein Übermitteln S3a von dem Anhänger 102 an die Zugmaschine 101 und von der Zugmaschine 101 and den fahrzeugexternen Server 300 (siehe Figuren 2 und 4).

Bei dem Übermitteln S3 der Fahrzeuginformation 111 und der Positionsinformation 113 erfolgt auch ein Übermitteln S3b von Routeninformation 116 und einer zu einer Route 121 gehörigen Beladungsinformation 118 an den fahrzeugexternen Server 300. Die Routeninformation 116 kann beispielsweise anhand eines Navigationssystem und/oder einer Nutzereingabe erfasst werden. Die Beladungsinformation 118 kann beispielsweise durch ein Massenbestimmungssystem erfasst werden. Die Beladungsinformation 118 gibt eine gleichbleibenden oder sich ändernden Masse des Fahrzeugs 100a, 100b an und kann beispielsweise anhand einer im Fahrzeug 100a, 100b aus einem Bremssystem 23 und/oder mit Achslasten (Onboard-weighing - siehe COMMISSION IMPLEMENTING REGULATION (EU) 2019/1213) ermittelten aktuellen Masse des Fahrzeugs 100a, 100b abgeleitet werden. Dabei kann ein an-, ab- und/oder umkoppeln von Anhängern 102 und/oder eine Fahrzeugbe- und/oder entladung durch einen Disponenten berücksichtigt werden.

Das Übermitteln S3, S3b erfolgt über eine fahrzeugseitige Mobilfunkschnittstelle 17a. Mit anderen Worten, bei Beginn der Ladung werden Fahrzeugkennung 115 und/oder Fahrzeugparameter und GPS-Position über ein GSM/LTE/5G-Modul, beispielsweise Telematik, sowie für die Abrechnung des Service notwendige Daten an die Cloud bzw. den fahrzeugexternen Server 300 übermittelt. Optional werden weitere Daten übermittelt, die das Ermitteln S52 eines für die aktuelle Position angepassten Ziel-Ladezustands 114 verfeinern.

Der fahrzeugexterne Server 300 ermittelt den Ziel-Ladezustand 114 wie unten beschrieben mit Bezug zu dem Verfahren 50 für den fahrzeugexternen Server 300 und mit Bezug zu Figur 4 beschrieben.

Gemäß Figur 1 erfolgt ein Empfangen S4 des Ziel-Ladezustands 114 von dem fahrzeugexternen Server 300 und ein Empfangen S4a eines Routenvorschlags 117 und eines Beladungsvorschlags 119 von dem fahrzeugexternen Server 300. Der Routenvorschlag 117 und der Beladungsvorschlag 119 ist jeweils auf den Ziel-Ladezustand 114 abgestimmt. Zusätzlich erfolgt ein Empfangen S4b eines inkompatiblen Routenvorschlags 117 und eines inkompatiblen Beladungsvorschlags 119 von dem fahrzeugexternen Server 300, wobei ein Befolgen des inkompatiblen Routenvorschlags 117 und/oder des inkompatiblen Beladungsvorschlags 119 durch das Fahrzeug 100a, 100b eine Einschränkung der Fähigkeit des elektrischen Antriebs 21 zur Nutzbremsung NB impliziert. Es erfolgt auch ein Empfangen S4c einer Mehrzahl von Ziel-Ladezuständen 114 von dem fahrzeugexternen Server 300, wobei jeder der Ziel-Ladezuständen 114 zu jeweils einer von mehreren fahrzeugexternen Ladestationen 200 in einer Umgebung 120 des Fahrzeugs 100a, 100b, korrespondiert. Optional erfolgt die Übermittlung optimaler örtlicher und/oder zeitlicher Ladepunkte oder empfohlene Ladesäulen an das Fahrzeug 100a, 100b, die Anhand der verfügbaren Routendaten berechnet werden. Das Empfangen S4, S4a, S4b, S4c erfolgt über die fahrzeugseitige Mobilfunkschnittstelle 17a.

Entsprechend dem oben beschriebenen Verfahren 1 für das Fahrzeug 100a, 100b werden von dem fahrzeugexternen Server 300 korrespondierende Verfahrensschritte des Verfahrens 50 für den fahrzeugexternen Server 300 durchgeführt.

Das Verfahren 50 für den fahrzeugexternen Server 300 beginnt mit einem Empfangen S51 der Fahrzeuginformation 111 und der Positionsinformation 113. Die Fahrzeuginformation 111 umfasst die Fahrzeugkennung 115. Ferner empfängt der fahrzeugexterne Server die Routeninformation 116 und die zu einer Route 121 gehörigen Beladungsinformation 118.

Es folgt ein Empfangen S54 einer Flotteninformation 124 von einem Flottenmanagementsystem 400 (siehe auch Figur 4). Der fahrzeugexterne Server 300 führt ein Ermitteln S52 des Ziel-Ladezustands 114 basierend auf der Fahrzeuginformation 111 und der Positionsinformation 113 durch (siehe Figur 4). Das Ermitteln S52 des Ziel-Ladezustands 114 zudem erfolgt unter Berücksichtigung von durch den Server 300 anhand der Fahrzeugkennung 115 und anhand der Fahrzeugkennung 115 und der Positionsinformation 113 ermittelbarer Fahrzeugdaten 314 (siehe Figur 4).

Wie in Figur 1 gezeigt findet ein Ermitteln S52a eines Routenvorschlags 117 und eines Beladungsvorschlags 119 statt. Das Ermitteln S52a des Routenvorschlags 117 und des Beladungsvorschlags 119 erfolgt derart, dass der ermittelte Ziel-Ladezustand 114 zu einem einer maximalen Ladekapazität entsprechenden Ladezustand SoC der Energiespeichervorrichtung 20 des Fahrzeugs 100a, 100b führt.

Es folgt ein Übermitteln S53 des Ziel-Ladezustands 114 an das elektrisch antreibbare Fahrzeug 100a, 100b und ein Übermitteln S53a des Routenvorschlags 117 und des Beladungsvorschlags 119 an das elektrisch antreibbare Fahrzeug 100a, 100b.

Nachdem das Fahrzeug 100a, 100b den Ziel-Ladezustand 114 empfangen hat, erfolgt ein Übermitteln S5 einer Ladeanfrage 122 von dem Fahrzeug 100a, 100b an die fahrzeugexterne Ladestation 200. Daraufhin erfolgt ein Laden S6 der Energiespeichervorrichtung 20 des Fahrzeugs 100a, 100b entsprechend der Ladeanfrage 122 durch die fahrzeugexterne Ladestation 200.

Nach dem Laden S6, beispielsweise während einer Fahrt des Fahrzeugs 100a, 100b, erfolgt ein Ermitteln S7 der Fähigkeit des elektrischen Antriebs 21 zur Nutzbremsung NB. In Abhängigkeit der Fähigkeit des elektrischen Antriebs 21 zur Nutzbremsung NB erfolgt Veranlassen S8 einer Warnung und/oder Änderung eines Energieverbrauch.

Figur 2 zeigt eine schematische Darstellung einer Übersicht eines Fahrzeugs 100a, insbesondere Nutzfahrzeugs 100b, gemäß einer Ausführungsform der Erfindung, einer fahrzeugexternen Ladestation 200 und eines fahrzeugexternen Servers 300 gemäß einer Ausführungsform der Erfindung.

Das Fahrzeug 100a, 100b ist dazu eingerichtet, dass mit Bezug zu Figur 1 beschriebene Verfahren 1 für das Fahrzeug 100a, 100b durchzuführen. Das Fahrzeug 100a, 100b befindet sich an einer Position 112 des Fahrzeugs 100a, 100b in einer Umgebung 120 des Fahrzeugs 100a, 100b und kann eine Route 121 befahren. Der fahrzeugexterne Server 300 ist dazu eingerichtet, dass mit Bezug zu Figur 1 beschriebene Verfahren 50 für den fahrzeugexternen Server 300 durchzuführen.

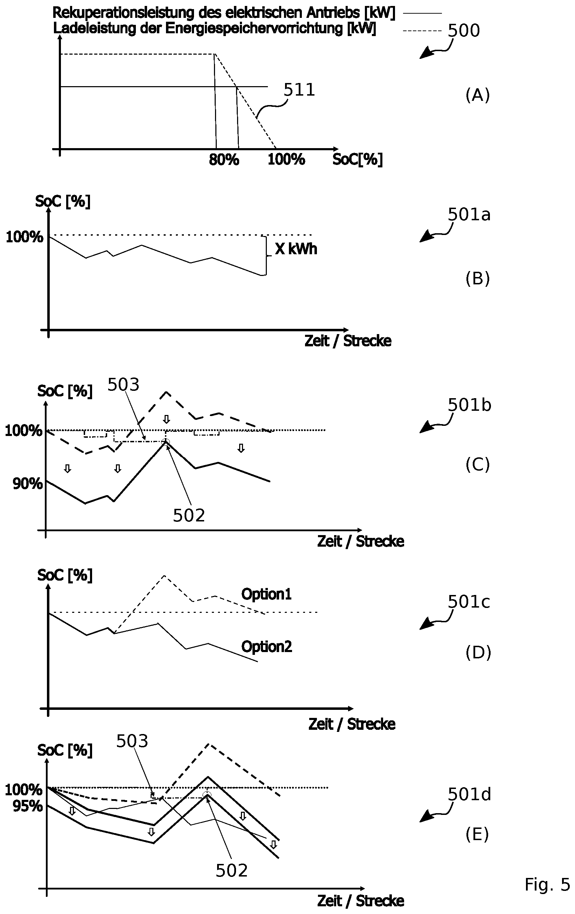

Das Fahrzeug 100a, 100b umfasst eine Zugmaschine 101 und einen Anhänger 102. Das Fahrzeug 100a, 100b bzw. die Zugmaschine 101 des Fahrzeugs 100a, 100b umfasst eine Energiespeichervorrichtung 20 und einen zur Nutzbremsung NB fähigen elektrischen Antrieb 21. Die Energiespeichervorrichtung 20 ist während einer Nutzbremsung NB aufladbar und die Energiespeichervorrichtung 20 ist an der fahrzeugexternen Ladestation 200 aufladbar. Die Energiespeichervorrichtung 20 ist ein Akkumulator beziehungsweise eine wiederaufladbare Batterie. Die Energiespeichervorrichtung 20 weist einen Ladezustand SoC auf, der die Menge der von der Energiespeichervorrichtung 20 in elektrische Energie umwandelbare Energie angibt. Der Ladezustand SoC ist durch die Energiespeichervorrichtung 20, insbesondere durch die maximale Kapazität der Energiespeichervorrichtung 20 beschränkt. Die fahrzeugexterne Ladestation 200 ist dazu eingerichtet, die Energiespeichervorrichtung des Fahrzeugs 100a, 100b gemäß einer Ladeanfrage 122 zu laden S6. Die Energiespeichervorrichtung 20 bzw. Eigenschaften der Energiespeichervorrichtung 20 sind auch mit Bezug zu Figur 5 beschrieben.

In Figur 2 umfassen die Zugmaschine 101 und der Anhänger 102 jeweils ein Steuergerät 14 mit einer Fahrzeugschnittstelle 15, einer Datenverarbeitungsvorrichtung 16 und einer Kommunikationsschnittstelle 17. Die Fahrzeugschnittstelle 15 ist dazu eingerichtet, Fahrzeuginformationen 111 bezüglich des Fahrzeugs 100a, 100b, also entsprechend der Zugmaschine 101 beziehungsweise des Anhängers 102 zu ermitteln bzw. zu erfassen. Die Fahrzeugschnittstelle 15 ist dazu eingerichtet, eine Positionsinformation 113 bezüglich des Fahrzeugs 100a, 100b zu erfassen. Beispielsweise verbindet die Fahrzeugschnittstelle 15 das Steuergerät mit einem Positionssensor, beispielsweise einem GPS-Sensor, um die Position 112 zu erfassen.

Mit den Fahrzeugschnittstellen 15 kann eine fahrzeuginterne Kommunikationsverbindung 123 zwischen der Zugmaschine 101 und dem Anhänger 102 hergestellt werden. Genauer wird die Kommunikationsverbindung 123 zwischen der Fahrzeugschnittstelle 15 der Zugmaschine 101 und der Fahrzeughersteller 15 des Anhängers 102 hergestellt. Damit kann eine den Anhänger 102 betreffende Fahrzeuginformation 111 von dem Anhänger 102 an die Zugmaschine 101 übertragen werden. Die Kommunikationsschnittstellen 17 sind jeweils Mobilfunkschnittstellen 17a, beispielsweise Schnittstellen zur Kommunikation in einem GSM- (3G-), LTE- (4G-) und/oder 5G-Netzwerk. Die Kommunikationsschnittstellen 17 sind jeweils dazu eingerichtet mit dem fahrzeugexternen Server 300 zu kommunizieren. Damit kann das Fahrzeug 100a, 100b Informationen bzw. Daten an den fahrzeugexternen Server 300 übermitteln und von dem fahrzeugexternen Server 300 empfangen.

Damit ist ein System aus Fahrzeug 100a, 100b und damit verbundener beziehungsweise verbindbarer Cloud, also dem fahrzeugexternen Server 300, geschaffen, das den Ziel-Ladezustand 114 effektiv ermitteln und verwenden kann.

Figur 3 zeigt eine schematische Darstellung eines Fahrzeugs 100a, insbesondere Nutzfahrzeugs 100b, gemäß einer weiteren Ausführungsform der Erfindung. Das Fahrzeug 100a, 100b gemäß Figur 3 wird mit Bezug zu Figur 2 beschrieben, wobei die Unterschiede zu dem Fahrzeug 100a, 100b gemäß Figur 2 beschrieben werden. Das Fahrzeug 100a, 100b gemäß Figur 3 ist in einer alternativen Darstellung illustriert.

Das Fahrzeug 100a, 100b umfasst eine Zugmaschine 101 und einen Anhänger 102. Die Zugmaschine 101 und der Anhänger 102 umfassen jeweils ein Steuergerät 14, ein Zentralsteuergerät 22, einen elektrischen Antrieb 21, ein elektromechanisches Bremssystem 23, eine Energiespeichersteuerungsvorrichtung 25 und eine Schnittstellenverbindung 15b.

Die Fahrzeugschnittstelle 15 der Zugmaschine 101 ist mit dem Zentralsteuergerät 22, dem elektrischen Antrieb 21, dem elektromechanischen Bremssystem 23, der Schnittstellenverbindung 15b und der Energiespeichersteuerungsvorrichtung 25 verbunden, die jeweils von der Zugmaschine 101 umfasst sind. Entsprechend ist die Fahrzeugschnittstelle 15 des Anhängers 102 mit dem Zentralsteuergerät 22, dem elektrischen Antrieb 21, dem elektromechanischen Bremssystem 23, der Schnittstellenverbindung 15b und der Energiespeichersteuerungsvorrichtung 25 verbunden, die jeweils von dem Anhänger 102 umfasst sind.

Damit kann das jeweilige Steuergerät 14 umfassende Fahrzeuginformationen 111 der Zugmaschine 101 bzw. des Anhängers 102 erfassen. Das Zentralsteuergerät 22 ist insbesondere dazu eingerichtet, die Fahrzeugkennung 115 zu speichern und an das Steuergerät 14 zu übermitteln. Die mit dem elektrischen Antrieb 21 verbundene Fahrzeugschnittstelle 15 ermöglicht ein Abfragen und/oder Erfassen von den elektrischen Antrieb 21 betreffenden Informationen, insbesondere von Statusinformationen und/oder der Leistungsfähigkeit des elektrischen Antrieb 21. Die mit dem elektromechanischen Bremssystem 23 verbundene Fahrzeugschnittstelle 15 ermöglicht ein Abfragen und/oder Erfassen von das elektromechanische Bremssystem 23 betreffenden Informationen, insbesondere von Statusinformationen und/oder der Leistungsfähigkeit des elektromechanischen Bremssystems 23. Die mit der Energiespeichersteuerungsvorrichtung 25 verbundene Fahrzeugschnittstelle 15 ermöglicht ein Abfragen und/oder Erfassen des Ladestatus 110 und/oder beispielsweise der maximalen Ladekapazität und/oder der Ladeleistungskennlinie der Batteriespeichervorrichtung 20. Die Energiespeichersteuerungsvorrichtung 25 ist beispielsweise durch eine vehicle control unit (VCU) und/oder ein Steuergerät für den elektrischen Antrieb 21 (eDrive Steuergerät) ausgebildet.

Die jeweilige Kommunikationsschnittstelle 17 der Steuergeräte 14 ist mit dem fahrzeugexternen Server 300 verbunden. Damit ist ein Übermitteln von Fahrzeuginformationen 111 von dem Anhänger 102 an die Zugmaschine 101 entbehrlich. Optional können Fahrzeuginformation 111 zwischen dem Anhänger 101 und der Zugmaschine 102 durch die Schnittstellenverbindungen 15b übermittelt und empfangen werden. Zwischen den Schnittstellenverbindungen 15b des Fahrzeugs 101 und des Anhängers 102 ist eine fahrzeugexterne Kommunikationsverbindung 123 herstellbar.

Figur 4 zeigt eine schematische Darstellung eines fahrzeugexternen Servers 300 gemäß einer Ausführungsform der Erfindung. Der fahrzeugexterne Server 300 ist dazu eingerichtet, dass mit Bezug zu Figur 1 beschriebene Verfahren 50 für den fahrzeugexternen Server 300 durchzuführen. Figur 4 zeigt weiterhin schematisch eine einfache Darstellung eines Fahrzeugs 100a, 100b gemäß einer Ausführungsform der Erfindung, wobei zur Beschreibung des Fahrzeugs 100a, 100b gemäß Figur 4 auf die Beschreibung der Fahrzeuge 100a, 100b gemäß Figuren 2 und 3 Bezug genommen wird.

Das Fahrzeug 100a, 100b umfasst eine Zugmaschine 101 und einen Anhänger 102. Die Zugmaschine 101 und der Anhänger 102 umfassen jeweils eine Mehrzahl von Zentralsteuergeräten 22. Jedes der Zentralsteuergeräte 22 ist zum Erfassen und/oder Abfragen der Fahrzeuginformation 111, der Positionsinformation 113, der Routeninformation 116 und/oder der Beladungsinformation 118 eingerichtet. Die Zugmaschine 101 und der Anhänger 102 sind über eine fahrzeuginterne Kommunikationsverbindung 123 verbunden, damit die Fahrzeuginformation 111, die Positionsinformation 113, die Routeninformation 116 und die Beladungsinformation 118 von dem Anhänger 102 an die Zugmaschine 101 übermittelt werden kann.

Die Zugmaschine 101 weist eine Energiespeichersteuerungsvorrichtung 25 auf. Die Energiespeichersteuerungsvorrichtung 25 ist mit dem Steuergerät 14 der Zugmaschine 101 verbunden, um den Ladestatus 110 an das Steuergerät zu 14 zu übermitteln. In Abhängigkeit von dem Ladestatus 110, also wenn der Ladestatus 110 angibt, dass die Energiespeichervorrichtung 20 durch die fahrzeugexterne Ladestation 200 geladen wird, wird eine Ladezustandsanfrage 312 von dem Fahrzeug 100a, 100b an den fahrzeugexternen Server 300 übermittelt. Dazu weist der fahrzeugexterne Server 300 ein Kommunikationsmodul 301 auf. Das Fahrzeug 100a, 100b ist mit dem fahrzeugexternen Server 300 über das fahrzeugseitige Steuergerät 14 und über das serverseitige Kommunikationsmodul 301 verbindbar, beispielsweise über ein Mobilfunknetzwerk. Neben der Ladezustandsanfrage 312 übermittelt das Fahrzeug 100a, 100b die Fahrzeuginformation 111, die Positionsinformation 113, die Routeninformation 116 und die Beladungsinformation 118.

Der fahrzeugexterne Server 300 umfasst ein Ermittlungsmodul 302 mit einem kinematischen Modell 303 und einem Ladezustandsmodul 304, eine Fahrzeugdatenbank 306 und eine Kartendatenbank 307. Der fahrzeugexterne Server 300 ist mit einem Wettermodul 305 verbindbar, um Wetterdaten 315 abzurufen.

Die von dem fahrzeugexternen Server 300 empfangene Fahrzeuginformation 111, Positionsinformation 113, Routeninformation 116 und Beladungsinformation 118 werden an das Ermittlungsmodul 302 beziehungsweise das kinematische Modell 303 zum Ermitteln S52 des Ziel-Ladezustand 114 übermittelt. Die Fahrzeuginformation 111 umfasst die Fahrzeugkennung 115.

Durch die Übermittlung der Routeninformation 116 wird insbesondere das Fahrtziel und optional ein oder mehrere Zwischenziele an den fahrzeugexternen Server 300 übermittelt. Damit kann eine Errechnung einer optimalen Route 126 anhand der Fahrzeugkonfiguration und des aktuellen Ladezustand SoC sowie eine Übermittlung von Routenvorschlägen 117 und/oder optimaler Ladepunkte an das Fahrzeug 100a, 100b erfolgen. Ein Ladepunkt ist eine in der Umgebung 120 des Fahrzeugs 100a, 100b befindliche fahrzeugexterne Ladestation 200.

Durch die Beladungsinformation 118 findet eine Berücksichtigung der tatsächlichen Fahrzeugmasse für die Ermittlung einer Ladezustandskurve 501a, 501b, 501c, 501d anhand eines entsprechenden Fahrzeugmodells bzw. des kinematischen Modells 303 statt, wobei anhand der möglicher Ladezustandskurven 501a, 501b, 501c, 501d der Ziel-Ladezustand 114 ermittelt wird. Eine genaue Berücksichtigung der Beladungsinformation 118 verringert einen möglicherweise notwendigen dynamischen Puffer.

Wetterdaten 315 werden dem kinematischen Modell 303 von dem Wettermodul 305 übermittelt. Insbesondere kann das Wettermodul 305 dem kinematischen Modell 305 Information über Wind und/oder Temperaturen in der Umgebung 120 bereitstellen.

Topographische Daten 316 werden von der Kartendatenbank 307 an das kinematischen Modell 303 übermittelt. Dabei können mögliche Routen 126 aufgrund der Positionsinformation 113 (GPS Position) und der von der Position 112 realisierbaren Strecken bzw. Fahrprofilverläufe berücksichtigt werden, wobei das Fahrzeugsimulationsmodell, zulässige Geschwindigkeiten, Höhenprofil, Leistungsfähigkeit des elektrischen Antriebs 21 und der Energiespeichervorrichtung 20 berücksichtigt werden können.

Anhand der von der Fahrzeuginformation 111 umfassten Fahrzeugkennung 115 können Fahrzeugdaten 314 aus der Fahrzeugdatenbank 306 dem kinematischen Modell 303 bereitgestellt werden. Mit anderen Worten kann das kinematische Modell 303 die Fahrzeugdaten 314 aus der Fahrzeugdatenbank 306 abrufen. Die Fahrzeugdaten 314 umfassen beispielsweise einen Fahrzeugtyp, eine Fahrzeugmasse, eine Leistungsfähigkeit eines elektrischen Antriebs 21, ein Modell eines Antriebsstrangs, eine maximale Ladekapazität, eine Ladeleistungskennlinie, eine Wirkungsgradkette, Fahrwiderstandsbeiwerte und/oder Fahrzeuggeometriedaten. Insbesondere kann die Fahrzeuginformation 111 und/oder können die Fahrzeugdaten 314 eine Ladekurve 500 (siehe Figur 5 (A)) umfassen. Damit kann eine Berücksichtigung von abnehmender Ladeleistung bei hohen Ladzuständen SoC im Fahrzeugmodell berücksichtigt werden. Aus der Fahrzeugkennung 115 kann der Typ des Fahrzeugs 100a, 100b, die maximale Fahrzeugmasse (zulässiges Gesamtgewicht), Parameter zur Ermittlung der Leistungsfähigkeit des elektrischen Antriebs 21 (max./rated eDrive Rekuperationsleistung, Max./Rated Batterieladeleistung, Batteriekapazität) und eines (rudimentären) Modells des Antriebsstrangs (Energieumsetzung, Wirkungsgradkette) ermittelt werden. Die Fahrzeugdaten 314 beeinflussen den Detaillierungsgrad des fahrzeugspezifischen kinematischen Modells 303, also die Simulationsinformation 318, beispielsweise durch eine spezifischen Wirkungsgradkette für Antrieb und/oder Nutzbremsung NB (eMaschine, Umrichter, Getriebe, Batterie etc.) zur Stützung der Genauigkeit der Vorausberechnung des Ladezustands SoC. Die Fahrwiderstandsbeiwerte umfassen Informationen zum Berechnen der Radwiderstandsleistung $P_{WR} = F_{WR} \cdot v_x \approx f_R \cdot m \cdot g \cdot v_x \cdot \cos \alpha$, der Steigungswiderstandsleistung $P_{WS} = F_{WS} \cdot c_x = m \cdot g \cdot v_x \cdot \sin \alpha$, der Beschleunigungswiderstandsleistung $P_{WB} = F_{WB} \cdot v_x = m \cdot a_x \cdot (1 + \varepsilon) \cdot v_x$ und der Luftwiderstandsleistung $P_{WL} = F_{WL} \cdot v_x = \frac{\rho}{2} \cdot c_x \cdot A \cdot v_r^2 \cdot v_x$, wobei P eine Leistung, $F$ eine Kraft, $v_x$ eine Geschwindigkeit, $m$ eine Masse, $g$ den Ortsfaktor, $\alpha$ einen Winkel, $a_x$ eine Beschleunigung, $\varepsilon$ eine positive Konstante, $\rho$ eine Dichte, $A$ eine Bezugsfläche, $v_r$ eine Relativgeschwindigkeit und $c_x$ einen Widerstandsbeiwert bezeichnet. Die Fahrzeuginformation 111 kann den mittleren Energieverbrauchs in Vergangenheit des Fahrzeugs pro km und/oder Leistungsdaten von elektrischen Verbrauchern oder sonstigen Dauerbremseinrichtungen (Bremswiderstand, Retarder, etc.) und/oder eine Leistungsaufnahmefähigkeit einer Reibbremsen umfassen.

Aus den an das kinematische Modell 303 übermittelten Informationen wird ein Modell des Fahrzeugs 100a, 100b zur Simulation des Fahrzeugs 100a, 100b erstellt und als Simulationsinformation 318 an das Ladezustandsmodul 304 übermittelt.

In der gezeigten Ausführungsform umfasst der fahrzeugexterne Server 300 ein Flottenmanagementsystem 400. Das Flottenmanagementsystem 400 ist dazu eingerichtet, Flotteninformation 124 an das Ladezustandsmodul 304 zu übermitteln, um die Ermittlung des Ziel-Ladezustand 114 zu verfeinern. Das Flottenmanagementsystem 400 ist dazu eingerichtet, Routenvorschläge 117 an den Disponenten unter Berücksichtigung vorgegebener (Teil-)Ziele, des optimalen Ladezustandsverlaufs und aktuellen Verkehrsdaten, zu übermitteln. Dabei können Routenvorschläge 117 durch den Disponenten ausgewählt werden, die später an das Fahrzeug 100a, 100b übermittelt werden. Die ausgewählten Routenvorschläge 117 umfassen eine Verfeinerung der Routenvorschläge 117 durch Eingabe der geplanten (Beladungs-) Gewichtsänderungen an einzelnen Teilzielen sowie eine Berücksichtigung der möglichen Ladedauer der Energiespeichervorrichtung 20 an einem jeweiligen Teilziel mit einer fahrzeugexternen Ladestation 200 durch eine Eingabe durch Disponenten oder durch Schätzung durch den fahrzeugexternen Server 300, z.B. durch Abfrage, ob eine Ladestelle vorhanden ist und einer üblichen Verladezeit pro Gewicht und/oder Palettenzahl. Eine Vorgabe einer geplanten Route 126 durch den Disponenten im Rahmen des Ermittelns S52 des Ziel-Ladezustands 114 kann berücksichtigt werden. Routen 126, die nicht gefahren werden sollen oder können, bspw. Aufgrund der Fahrzeugmasse, Fahrzeughöhe, werden ignoriert oder schwach gewichtet. Eine Anpassung der geplanten Route 126 an die aktuelle/geänderte Verkehrssituation ist möglich, um dabei einen optimalen SoC-Verlauf berücksichtigen zu können. Streckenvorschlägen, die eine SoC-Limitierung erfordern, können vermieden werden. Sollte ein dynamischer Puffer nötig sein, kann eine Route 126 gewählt werden, bei der im Laufe der Fahrt ein Ladezustand SoC von 100% erreicht wird, um keine Reichweite zu verschenken und Kosten zu sparen, weil weniger Energie vom Ladepunkt bezogen werden muss.

Das Ladezustandsmodul 304 berechnet anhand des kinematischen Modells 303 und der Flotteninformation 124 den Ziel-Ladezustand 114. Das Ermittlungsmodul 302 ist somit dazu eingerichtet, das mit Bezug zu Figur 1 bereits erwähnte Ermitteln S52 des Ziel-Ladezustands 114 durchzuführen. Dazu ermittelt das Ladezustandsmodul 304 eine oder mehrere Ladezustandskurven 501a, 501b, 501c, 501d wie in Figur 5 gezeigt, und ermittelt aus den möglichen Ladezustandskurven 501a, 501b, 501c, 501d den Ziel-Ladezustand 114 derart, dass ein effektives Betreiben des Fahrzeugs 100a, 100b möglich ist. Damit erfolgt das Ermitteln S52 des Ziel-Ladezustands 114 anhand des kinematischen Modells 303 des Fahrzeugs 100a, 100b, unter Berücksichtigung eines bestimmten Szenarios, wobei das Szenario das Fahren entlang einer Strecke mit einem Gefälle und mit einer Geschwindigkeit umfasst, unter Berücksichtigung der Flotteninformation 124 und unter Berücksichtigung von durch den Server 300 anhand der Positionsinformation 113 ermittelbarer Strecken und/oder Fahrprofilverläufe, anhand von Wetterdaten, anhand von Verkehrsinformation, anhand von in der Umgebung 120 des Fahrzeugs 100a, 100b befindlicher weiterer Ladestationen 200a, 200b. Durch Einbeziehung der aktuellen Verkehrslage (Staus, Umleitungen) kann beispielsweise die erwartete Geschwindigkeit im Bereich des Staus berücksichtigt werden oder eine wahrscheinliche Ausweichroute, die sich von der Route 126 des Disponenten unterscheidet.

Das Ermitteln S52 des Ziel-Ladezustands 114 wird durch künstliche Intelligenz unterstützt, und erfolgt unter Berücksichtigung eines Risiko-Gewichtungsfaktors. Die Verwendung eines Risiko-Gewichtungsfaktors erfolgt zur Berechnung des freizuhaltenden Ladezustands SoC. Der Risiko-Gewichtungsfaktor bestimmt beispielsweise, wie stark eine worst-case-Route mit einbezogen wird, oder wie stark die möglicherweise erzwungene Energiedissipation in eine Berechnung mit einbezogen wird. Optional kann der Disponent diesen Faktor festlegen.

Der Ziel-Ladezustand 114 wird von dem Ladezustandsmodul 304 an das Kommunikationsmodul 301 übermittelt, um den Ziel-Ladezustand 114 von dem fahrzeugexternen Server 300 über das Kommunikationsmodul 301 und die Kommunikationsschnittstelle 17 an das Fahrzeug 100a, 100b zu übermitteln. Das Steuergerät 14 empfängt über die Kommunikationsschnittstelle 17 den Ziel-Ladezustand 114 und übermittelt den Ziel-Ladezustand 114 über die Fahrzeugschnittstelle 15 an die Energiespeichersteuerungsvorrichtung 25.

Figur 5 zeigt eine schematische Ladekurve 500 und vier exemplarische Ladezustandskurven 501a, 501b, 501c, 501d einer Energiespeichervorrichtung 20 eines Fahrzeugs 100a, insbesondere Nutzfahrzeugs 100b. Das Fahrzeug 100a, 100b ist ein Fahrzeug 100a, 100b wie mit Bezug zu Figuren 2 oder 3 beschrieben.

Figur 5 (A) zeigt die Rekuperationsleistung des elektrischen Antriebs 21 in kW in Abhängigkeit von dem Ladezustand SoC der Energiespeichervorrichtung 20. Die Rekuperationsleistung des elektrischen Antriebs 21 ist durch eine durchgezogene Linie dargestellt und unabhängig von dem Ladezustand SoC der Energiespeichervorrichtung 20. Figur 5 (A) zeigt auch die Ladekurve 500, also die Ladeleistung der Energiespeichervorrichtung 20 in kW in Abhängigkeit von dem Ladezustand SoC. Typischerweise nimmt die Ladeleistung der Energiespeichervorrichtung 20 in einem Sättigungsbereich 511 ab. In dem Sättigungsbereich 511 ist die Rekuperationsleistung derart eingeschränkt, dass die Energiespeichervorrichtung 20 weniger Leistung aufnehmen kann, als durch Rekuperation von dem elektrischen Antrieb 21 bereitgestellt wird.

Jede der Ladezustandskurve 501a, 501b, 501c, 501d zeigt den Ladezustand SoC der Energiespeichervorrichtung 20 in Abhängigkeit von der Zeit bzw. der Strecke, die das Fahrzeug 100a, 100c fährt. Beim Fahren wird die in der Energiespeichervorrichtung 20 gespeicherte Energie durch den elektrischen Antrieb 21 in kinetische Energie des Fahrzeugs 100a, 100c umgewandelt. Damit sinkt der Ladezustand SoC in Abhängigkeit von der Zeit bzw. der Strecke. Kinetische Energie kann durch Rekuperation bzw. durch Nutzbremsung NB durch den elektrischen Antrieb 21 umgewandelt und der Energiespeichervorrichtung 20 zugeführt werden. Dadurch kann der Ladezustand SoC der Energiespeichervorrichtung 20 steigen. Die maximale Kapazität der Energiespeichervorrichtung 20 ist jeweils durch eine horizontale gepunktete Linie angedeutet.

Figur 5 (B) zeigt eine erste Ladezustandskurve 501a. In dem in Figur 5 (B) gezeigten Beispiel kann die Energiespeichervorrichtung 20 maximal geladen werden, d. h. der Ziel-Ladezustand 114 entspricht der maximalen Kapazität der Energiespeichervorrichtung 20 und es ist kein dynamischer Puffer notwendig. Der Verlauf der Ladeleistung entspricht einer sogenannten worst-case-Route, da von der Position 112 des Fahrzeugs 100a, 100b entlang einer beliebige Route 121 nicht so viel Energie durch Nutzbremsung NB zurückgewonnen werden kann, dass der Ladezustand SoC der Energiespeichervorrichtung 20 die maximale Kapazität übersteigt.

Figur 5 (C) zeigt eine zweite Ladezustandskurve 501b. Der fahrzeugexterne Server 300 erkennt, dass ein Ziel-Ladezustand 114 von 100 % dazu führen würde, dass der Ladezustand SoC die maximale Kapazität der Energiespeichervorrichtung 20 übersteigt. Dieses Szenario ist mit einer gestrichelten Linie dargestellt und würde dazu führen, dass die Energiespeichervorrichtung 20 Schaden nimmt, die Energiespeichervorrichtung 20 künstlich entleert werden muss oder die Dauerbremsfähigkeit des Fahrzeugs mit Rekuperationsunterstützung nicht gewährleistet werden kann. Um das zu vermeiden, übermittelt der fahrzeugexterne Server 300 einen Ziel-Ladezustand 114 von in diesem Beispiel 90 % der Kapazität der Energiespeichervorrichtung 20 an das Fahrzeug 100a, 100b. Damit ein dynamischer Puffer von 10 % vorgesehen. Startet das Fahrzeug 100a, 100b eine Fahrt mit dem derart eingestellten Ziel-Ladezustand 114 übersteigt der Ladezustand SoC selbst bei Nutzbremsung NB nicht die maximale Kapazität der Energiespeichervorrichtung 20 und ermöglicht so einen effektiven Betrieb des Fahrzeugs 100a 100b. Der maximale Ladezustand SoC wird bei der betrachteten Route 126 beziehungsweise in dem betrachteten Szenario an einem kritischen Punk 502 erreicht. Der kritische Punkt 502 ist ein lokales Maximum des Ladezustands SoC in Abhängigkeit der Zeit und/oder Strecke. Die obere gestrichelte Kurve ist gegenüber der unteren Kurve mit durchgezogener Linie wie durch die Doppelpfeile angedeutet um den Puffer verschoben, um Energie- und Leistungsanforderungen zu gewährleisten. Die Zeit- und/oder Streckenabschnitte, in der eine Rekuperation erfolgt, ist mit punktgestrichenen Linien markiert. Dabei steigt der Ladezustand SoC und es gibt einen Bereich 503 maximaler Ladeleistung, in dem die meiste Energie zurückgewonnen werden kann und der Ladezustand SoC am schnellsten steigt. Zwischen Bereichen mit Rekuperation findet keine oder weniger Rekuperation statt und der Ladezustand SoC nimmt ab.

Figur 5 (D) zeigt eine dritte Ladezustandskurve 501c. Die dritte Ladezustandskurve 501c umfasst zwei Optionen Option1, Option2. Die erste Option Option1 ist mit einer gestrichelten Linie dargestellt und würde dazu führen, dass der Ladezustand SoC die maximale Kapazität der Energiespeichervorrichtung 20 übersteigt. Die zweite Option Option2 ist mit einer durchgezogenen Linie dargestellt und erlaubt einen effizienten Betrieb des Fahrzeugs 100a, 100b. Der fahrzeugexterne Server 300 kann mit einem Disponenten über ein Flottenmanagementsystem 400 in Verbindung stehen und dem Disponenten über das Flottenmanagementsystem 400 die beiden Optionen Option1 und Option2 übermitteln. Der Disponent kann über das Flottenmanagementsystem 400 die zweite Option Option2 wählen, wobei der fahrzeugexterne Server 300 daraufhin einen entsprechenden Ziel-Ladezustand 114 und einen entsprechenden Routenvorschlag 117 und/oder Beladungsvorschlag 119 an das Fahrzeug 100a, 100b übermittelt.

Figur 5 (E) zeigt eine vierte Ladezustandskurve 501d. In Figur 5 (E) sind vier Szenarien der Ladezustandskurve 501d gezeigt. Das durch die gestrichelte Kurve dargestellte Szenario zeigt eine worst-case-Route, also die Route 126, bei der der maximale Ladezustand SoC bei einer Rekuperationsleistung erzielt wird. Der fahrzeugexterne Server 300 erkennt, dass die Wahrscheinlichkeit für das Szenario der worst-case-Route mittelgroß ist und dass der Ladezustand SoC die maximale Kapazität der Energiespeichervorrichtung 20 übersteigen würde. Es gibt einen Bereich 503 maximaler Ladeleistung, in dem die meiste Energie zurückgewonnen werden kann und der Ladezustand SoC am schnellsten steigt. Dabei übersteigt der Ladezustand SoC in dem gezeigten Beispiel die maximale Kapazität der Energiespeichervorrichtung 20. Das durch die obere fette Kurve dargestellte Szenario zeigt die worst-case-Route einschließlich einer möglichen erzwungene Energiedissipation durch eine künstliche Entleerung der Energiespeichervorrichtung 20. Der fahrzeugexterne Server 300 erkennt, dass die Wahrscheinlichkeit für das Szenario mittelgroß ist und dass der Ladezustand SoC die maximale Kapazität der Energiespeichervorrichtung 20 an einem kritischen Punkt K übersteigt. Der kritische Punkt K ist dabei ein lokales Maximum des Ladezustands SoC. Daher ermittelt der fahrzeugexterne Server 300 einen Ziel-Ladezustand 114 unterhalb der maximalen Kapazität der Energiespeichervorrichtung 20 und bestimmt in diesem Beispiel einen Ziel-Ladezustand 114 von 95 % und somit einen Puffer von 5 % wie in der unteren fetten Kurve dargestellt. Die obere fette Kurve ist gegenüber der unteren fetten Kurve wie durch die Doppelpfeile angedeutet um den Puffer verschoben, um Energie- und Leistungsanforderungen zu gewährleisten. Damit ist ein effektiver Betrieb des Fahrzeugs 100a, 100b möglich, da die maximale Kapazität der Energiespeichervorrichtung 20 nicht überschritten wird. Das durch die dünne Kurve dargestellte Szenario zeigt die wahrscheinlichste Route 121 beziehungsweise ein best-case-Szenario, analog zu der ersten Ladezustandskurve 501a. Die Wahrscheinlichkeit einer Route 121 bestimmt, wie viel Energie zwangsweise dissipiert werden darf. Wäre die worstcase Route beispielsweise eine sehr wahrscheinliche Route 126, so würde eine möglichst geringe/keine Dissipation berücksichtigt werden und der Ziel-Ladezustand 114 würde niedriger eingestellt werden.

Bezugszeichen (Teil der Beschreibung)

1 Verfahren für elektrisch antreibbares Fahrzeug, insbesondere Nutzfahrzeug

14 Steuergerät

15 Fahrzeugschnittstelle
15b Schnittstellenverbindung
16 Datenverarbeitungsvorrichtung
17 Kommunikationsschnittstelle
17a Mobilfunkschnittstelle

20 Energiespeichervorrichtung
21 elektrischer Antrieb
22 Zentralsteuergerät
23 elektromechanisches Bremssystem
25 Energiespeichersteuerungsvorrichtung

50 Verfahren für einen fahrzeugexternen Server

100a elektrisch antreibbares Fahrzeug
100b elektrisch antreibbares Nutzfahrzeug
101 Zugmaschine
102 Anhänger

110 Ladestatus
111 Fahrzeuginformation
112 Position
113 Positionsinformation
114 Ziel-Ladezustand
115 Fahrzeugkennung
116 Routeninformation
117 Routenvorschlag
118 Beladungsinformation
119 Beladungsvorschlag
120 Umgebung
121 Route
122 Ladeanfrage
123 fahrzeuginterne Kommunikationsverbindung
124 Flotteninformation

200 fahrzeugexterne Ladestation

300 fahrzeugexterner Server
301 Kommunikationsmodul
302 Ermittlungsmodul
303 kinematisches Modell
304 Ladezustandsmodul
305 Wettermodul
306 Fahrzeugdatenbank
307 Kartendatenbank

311 Information
312 Ladezustandsanfrage
313 Datenbereitstellung
314 Fahrzeugdaten
315 Wetterdaten
316 topographische Daten
318 Simulationsinformation

400 Flottenmanagementsystem

500 Ladekurve
501a Ladezustandskurve
501b Ladezustandskurve
501c Ladezustandskurve
501d Ladezustandskurve
502 kritischer Punkt
503 Bereich

511 Sättigungsbereich

S1 Ermitteln eines Ladestatus
S2 Erfassen von Fahrzeuginformation und Positionsinformation
S3 Übermitteln der Fahrzeuginformation und Positionsinformation
S3a Übermitteln von Anhänger an Zugmaschine und von Zugmaschine an Server
S3b Übermitteln von Routeninformation und/oder Beladungsinformation
S4 Empfangen eines Ziel-Ladezustands
S4a Empfangen eines Routenvorschlags und/oder Beladungsvorschlags
S4b Empfangen eines inkompatiblen Routenvorschlags und/oder inkompatiblen Beladungsvorschlags
S4c Empfangen einer Mehrzahl von Ziel-Ladezuständen
S5 Übermitteln einer Ladeanfrage
S6 Laden der Energiespeichervorrichtung
S7 Ermitteln
S51 Empfangen von Fahrzeuginformation und Positionsinformation
S52 Ermitteln eines Ziel-Ladezustands
S52a Ermitteln eines Routenvorschlags und/oder Beladungsvorschlags
S53 Übermitteln des Ziel-Ladezustands
S53a Übermitteln des Routenvorschlags und/oder Beladungsvorschlags
S54 Ermitteln einer Flotteninformation

NB Nutzbremsung
SoC Ladezustand

**Patentansprüche**

1. Verfahren (1) für ein elektrisch antreibbares Fahrzeug (100a), welches als Nutzfahrzeug (100b) ausgebildet ist, mit einer Energiespeichervorrichtung (20) und einem zur Nutzbremsung (NB) fähigen elektrischen Antrieb (21), wobei die Energiespeichervorrichtung (20) während einer Nutzbremsung (NB) aufladbar ist und die Energiespeichervorrichtung (20) an einer fahrzeugexternen Ladestation (200) aufladbar ist, das Verfahren (1) aufweisend die Schritte:

- Ermitteln (S1) eines Ladestatus (110), wobei der Ladestatus (110) die Information umfasst, ob die Energiespeichervorrichtung (20) durch die fahrzeugexterne Ladestation (200) geladen wird;
- Erfassen (S2), in Abhängigkeit von dem Ladestatus (110), von einer das Fahrzeug (100a, 100b), betreffender Fahrzeuginformation (111) und einer die Position (112) des Fahrzeugs (100a, 100b), betreffender Positionsinformation (113);
- Übermitteln (S3) der Fahrzeuginformation (111) und der Positionsinformation (113) an einen fahrzeugexternen Server (300);
- Übermitteln (S3b) von Routeninformation (116) und einer zu einer Route (121) gehörigen Beladungsinformation (118) an den fahrzeugexternen Server (300), wobei die Beladungsinformation (118) eine Masse des Fahrzeugs (100a, 100b) angibt; und
- Empfangen (S4) eines Ziel-Ladezustands (114) von dem fahrzeugexternen Server (300), wobei der Ziel-Ladezustand (114) basierend auf der Fahrzeuginformation (111), der Positionsinformation (113), der Routeninformation (116) und der Beladungsinformation (118) ermittelt wird.

**2.** Verfahren nach Anspruch 1, wobei

- das Erfassen (S2) der Fahrzeuginformation (111) und der Positionsinformation (113) erfolgt, wenn die Energiespeichervorrichtung (20) durch die fahrzeugexterne Ladestation (200) geladen wird.

**3.** Verfahren nach Anspruch 1 oder 2, wobei

- die Fahrzeuginformation (111) eine Fahrzeugkennung (115) umfasst.

**4.** Verfahren nach einem der vorherigen Ansprüche, wobei das elektrisch antreibbare Fahrzeug (100a, 100b), eine Zugmaschine (101) und einen Anhänger (102) umfasst, wobei:

- das Übermitteln (S3) der Fahrzeuginformation (111) und der Positionsinformation (113) an den fahrzeugexternen Server (300) jeweils von der Zugmaschine (101) und von dem Anhänger (102) an den fahrzeugexternen Server (300) erfolgt und/oder
- das Übermitteln (S3) der Fahrzeuginformation (111) und der Positionsinformation (113) an den fahrzeugexternen Server (300) umfasst ein Übermitteln (S3a) von dem Anhänger (102) an die Zugmaschine (101) und von der Zugmaschine (101) an den fahrzeugexternen Server (300).

**5.** Verfahren nach einem der vorherigen Ansprüche, wobei das Verfahren ferner aufweist:

- Empfangen (S4a) eines Routenvorschlags (117) und/oder eines Beladungsvorschlags (119) von dem fahrzeugexternen Server (300).

**6.** Verfahren nach Anspruch 5, wobei

- der Routenvorschlag (117) und/oder der Beladungsvorschlags (119) auf den Ziel-Ladezustand (114) abgestimmt ist.

**7.** Verfahren nach Anspruch 6, wobei das Verfahren ferner aufweist:

- Empfangen (S4b) eines inkompatiblen Routenvorschlags (117) und/oder eines inkompatiblen Beladungsvorschlags (119) von dem fahrzeugexternen Server (300), wobei ein Befolgen des inkompatiblen Routenvorschlags (117) und/oder des inkompatiblen Beladungsvorschlags (119) durch das Fahrzeug (100a, 100b), eine Einschränkung der Fähigkeit des elektrischen Antriebs (21) zur Nutzbremsung (NB) impliziert;
- Ermitteln (S7) der Fähigkeit des elektrischen Antriebs (21) zur Nutzbremsung (NB);
- Veranlassen (S8) einer Warnung und/oder Änderung eines Energieverbrauchs in Abhängigkeit der Fähigkeit des elektrischen Antriebs (21) zur Nutzbremsung (NB).

**8.** Verfahren nach Anspruch 7, wobei das Verfahren aufweist:

- das Veranlassen (S8) einer Warnung eines Energieverbrauchs in Abhängigkeit der Fähigkeit des elektrischen Antriebs (21) zur Nutzbremsung (NB); wobei
- die Warnung einen angepassten Routenvorschlag (117) unter Berücksichtigung der Position (112) des Fahrzeugs (100a, 100b), umfasst, wobei der Routenvorschlag (117) derart angepasst ist, dass eine minimale Änderung eines Energieverbrauchs in Abhängigkeit der Fähigkeit des elektrischen Antriebs (21) zur Nutzbremsung (NB) erforderlich ist.

**9.** Verfahren nach einem der vorherigen Ansprüche, wobei das Verfahren ferner aufweist:

- Übermitteln (S5) einer Ladeanfrage (122) an die fahrzeugexterne Ladestation (200).

**10.** Verfahren nach einem der vorherigen Ansprüche, wobei

- das Übermitteln (S3) und das Empfangen (S4) über eine fahrzeugseitige Mobilfunkschnittstelle (17a) erfolgt.

**11.** Verfahren nach einem der vorherigen Ansprüche, wobei das Verfahren ferner aufweist:

- Empfangen (S4c) einer Mehrzahl von Ziel-Ladezuständen (114) von dem fahrzeugexternen Server (300), wobei jeder der Ziel-Ladezustände (114) zu jeweils einer von mehreren fahrzeugexternen Ladestationen (200) in einer Umgebung (120) des Fahrzeugs (100a, 100b), korrespondiert.

**12.** Verfahren (50) für einen fahrzeugexternen Server (300), das Verfahren (50) aufweisend die Schritte:

- Empfangen (S51), von einem elektrisch antreibbaren Fahrzeug (100a), welches als Nutzfahrzeug (100b) ausgebildet ist, einer Fahrzeuginformation (111) und einer Positionsinformation (113), wobei die Fahrzeuginformation (111) das elektrisch antreibbare Fahrzeug (100a, 100b) betrifft, und wobei die Positionsinformation (113) eine Position (112) des elektrisch antreibbaren Fahrzeugs (100a, 100b) betrifft;
- Empfangen von Routeninformation (116) und einer zu einer Route (121) gehörigen Beladungsinformation (118) von dem elektrisch antreibbarem Fahrzeug (100a, 100b), wobei die Beladungsinformation (118) eine Masse des elektrisch antreibbarem Fahrzeugs (100a, 100b) angibt;
- Ermitteln (S52) eines Ziel-Ladezustands (114) basierend auf der Fahrzeuginformation (111), der Positionsinformation (113), der Routeninformation (116) und der Beladungsinformation (118); und
- Übermitteln (S53) des Ziel-Ladezustands (114) an das elektrisch antreibbare Fahrzeug (100a, 100b).

**13.** Verfahren nach Anspruch 12, wobei

- die Fahrzeuginformation (111) eine Fahrzeugkennung (115) umfasst, und wobei
- das Ermitteln (S52) des Ziel-Ladezustands (114) unter Berücksichtigung von durch den Server (300) anhand der Fahrzeugkennung (115) ermittelbarer folgender Fahrzeugdaten (314) erfolgt: Fahrzeugtyp, Fahrzeugmasse, Leistungsfähigkeit eines elektrischen Antriebs (21), Modell eines Antriebsstrangs, maximale Ladekapazität, Ladeleistungskennlinie, Wirkungsgradkette, Fahrwiderstandsbeiwerte, Fahrzeuggeometriedaten.

**14.** Verfahren nach einem der Ansprüche 12 oder 13, wobei

- das Ermitteln (S52) des Ziel-Ladezustands (114) anhand eines kinematischen Modells (303) des Fahrzeugs (100a, 100b) erfolgt.

**15.** Verfahren nach einem der Ansprüche 12 bis 14, wobei

- das Ermitteln (S52) des Ziel-Ladezustands (114) unter Berücksichtigung von durch den Server (300) anhand der Positionsinformation (113) ermittelbarer Strecken und/oder Fahrprofilverläufe erfolgt, anhand von Wetterdaten (315), anhand von Verkehrsinformation, anhand von in einer Umgebung (120) des Fahrzeugs (100a, 100b) befindlicher weiterer Ladestationen (200a, 200b).

**16.** Verfahren nach einem der Ansprüche 12 bis 15, wobei

- das Ermitteln (S52) des Ziel-Ladezustands (114) unter Berücksichtigung eines bestimmten Szenarios ermittelt wird, wobei das Szenario das Fahren entlang einer Strecke mit einem Gefälle und mit einer Geschwindigkeit umfasst.

**17.** Verfahren nach einem der Ansprüche 12 bis 16, wobei das Verfahren aufweist:

- Ermitteln (S52a) eines Routenvorschlags (117) und/oder eines Beladungsvorschlags (119), und
- Übermitteln (S53a) des Routenvorschlags (117) und/oder des Beladungsvorschlags (119) an das elektrisch antreibbare Fahrzeug (100a, 100b).

**18.** Verfahren nach Anspruch 17, wobei

- das Ermitteln (S52a) des Routenvorschlags (117) und/oder des Beladungsvorschlags (119) derart erfolgt, dass der ermittelte Ziel-Ladezustand (114) zu einem einer maximalen Ladekapazität entsprechenden Ladezustand (SoC) einer Energiespeichervorrichtung (20) des Fahrzeugs (100a, 100b) führt.

**19.** Verfahren nach einem der Ansprüche 12 bis 18, wobei

- das Ermitteln (S52) des Ziel-Ladezustands (114) durch künstliche Intelligenz unterstützt und/oder unter Berücksichtigung eines Risiko-Gewichtungsfaktors erfolgt.

**20.** Verfahren nach einem der Ansprüche 12 bis 19, wobei das Verfahren aufweist:

- Ermitteln und/oder Empfangen (S54) einer Flotteninformation (124) von einem Flottenmanagementsystem (400), wobei
- das Ermitteln (S52) des Ziel-Ladezustands (114) unter Berücksichtigung der Flotteninformation (124) erfolgt.

**21.** Computerprogramm und/oder computerlesbares Medium, umfassend Befehle, die bei der Ausführung des Programms bzw. der Befehle durch einen Computer diesen veranlassen, das Verfahren (1, 50) und/oder die Schritte des Verfahrens (1, 50) nach einem der vorherigen Ansprüche durchzuführen.

**22.** Steuergerät (14) für ein elektrisch antreibbares Fahrzeug (100a), welches als Nutzfahrzeug (100b) ausgebildet ist, mit einer Energiespeichervorrichtung (20) und einem zur Nutzbremsung (NB) fähigen elektrischen Antrieb (21), wobei die Energiespeichervorrichtung (20) während einer Nutzbremsung (NB) aufladbar ist und die Energiespeichervorrichtung (20) an einer fahrzeugexternen Ladestation (200) aufladbar ist, wobei das Steuergerät (14) dazu eingerichtet ist, das Verfahren (1) nach einem der Ansprüche 1 bis 11 durchzuführen.

**23.** Steuergerät (14) nach Anspruch 22 für ein elektrisch antreibbares Fahrzeug (100a, 100b) wobei das Steuergerät (14) eine Fahrzeugschnittstelle (15), eine Datenverarbeitungsvorrichtung (16) und eine Kommunikationsschnittstelle (17) zur Kommunikation mit einem fahrzeugexternen Server (300) aufweist.

**24.** Steuergerät (14) nach Anspruch 23, wobei die Kommunikationsschnittstelle (17) eine Mobilfunkschnittstelle (1a) aufweist.

**25.** Elektrisch antreibbares Fahrzeug (100a), welches als Nutzfahrzeug (100b) ausgebildet ist, mit einer Energiespeichervorrichtung (20) und einem zur Nutzbremsung (NB) fähigen elektrischen Antrieb (21) und mit einem Steuergerät (14) nach einem der Ansprüche 22 bis 24, wobei die Energiespeichervorrichtung (20) während einer Nutzbremsung (NB) aufladbar ist und die Energiespeichervorrichtung (20) an einer fahrzeugexternen Ladestation (200) aufladbar ist.

**26.** Fahrzeugexterner Server (300), wobei der fahrzeugexterne Server (300) dazu eingerichtet ist, das Verfahren (50) nach einem der Ansprüche 12 bis 20 durchzuführen.

## Claims

**1.** Method (1) for an electrically drivable vehicle (100a), which is designed as a utility vehicle (100b), comprising an energy storage device (20) and an electric drive (21) capable of regenerative braking (NB), wherein the energy storage device (20) can be charged during regenerative braking (NB) and the energy storage device (20) can be charged at a vehicle-external charging station (200), the method (1) comprising the steps of:

- determining (S1) a state of charge (110), wherein the state of charge (110) includes the information on whether the energy storage device (20) is being charged by the vehicle-external charging station (200);
- detecting (S2), depending on the state of charge (110), vehicle information (111) relating to the vehicle (100a, 100b) and position information (113) relating to the position (112) of the vehicle (100a, 100b);
- transmitting (S3) the vehicle information (111) and the position information (113) to a vehicle-external server (300);
- transmitting (S3b) route information (116) and load information (118) belonging to a route (121) to the vehicle-external server (300), wherein the load information (118) specifies a mass of the vehicle (100a, 100b); and
- receiving (S4) a target state of charge (114) from the vehicle-external server (300), wherein the target state of charge (114) is determined on the basis of the vehicle information (111), the position information (113), the route information (116) and the load information (118).

**2.** Method according to claim 1, wherein

- the vehicle information (111) and the position information (113) are detected (S2) when the energy storage device (20) is charged by the vehicle-external charging station (200).

**3.** Method according to claim 1 or claim 2, wherein

- the vehicle information (111) includes a vehicle identifier (115).

**4.** Method according to any of the preceding claims, wherein the electrically drivable vehicle (100a, 100b) comprises a towing vehicle (101) and a trailer (102), wherein:

- the vehicle information (111) and the position information (113) are transmitted (S3) to the vehicle-external server (300) from the towing vehicle (101) and from the trailer (102) to the vehicle-external server (300) and/or
- transmitting (S3) the vehicle information (111) and the position information (113) to the vehicle-external server (300) comprises a transmission (S3a) from the trailer (102) to the towing vehicle (101) and from the towing vehicle (101) to the vehicle-external server (300).

**5.** Method according to any of the preceding claims, wherein the method further comprises:

- receiving (S4a) a route suggestion (117) and/or a load suggestion (119) from the vehicle-external server (300).

**6.** Method according to claim 5, wherein

- the route suggestion (117) and/or the load suggestion (119) is aligned with the target state of charge (114).

**7.** Method according to claim 6, wherein the method further comprises:

- receiving (S4b) an incompatible route suggestion (117) and/or an incompatible load suggestion (119) from the vehicle-external server (300), wherein the vehicle (100a, 100b), following the incompatible route suggestion (117) and/or the incompatible load suggestion (119), implies a limitation of the capability of the electric drive (21) to perform regenerative braking (NB);
- determining (S7) the capability of the electric drive (21) to perform regenerative braking (NB);
- initiating (S8) a warning and/or changing energy consumption depending on the capability of the electric drive (21) to perform regenerative braking (NB).

**8.** Method according to claim 7, wherein the method comprises:

- initiating (S8) a warning of energy consumption depending on the capability of the electric drive (21) to perform regenerative braking (NB); wherein
- the warning includes an adapted route suggestion (117) taking into account the position (112) of the vehicle (100a, 100b), wherein the route suggestion (117) is adapted such that a minimal change in energy consumption is required depending on the capability of the electric drive (21) to perform regenerative braking (NB).

**9.** Method according to any of the preceding claims, wherein the method further comprises:

- transmitting (S5) a charging request (122) to the vehicle-external charging station (200).

**10.** Method according to any of the preceding claims, wherein

- transmitting (S3) and receiving (S4) is carried out via a vehicle-side mobile communication interface (17a).

**11.** Method according to any of the preceding claims, wherein the method further comprises:

- receiving (S4c) a plurality of target state of charges (114) from the vehicle-external server (300), wherein each of the target state of charges (114) corresponds to one of a number of vehicle-external charging stations (200) in the vicinity (120) of the vehicle (100a, 100b).

**12.** Method (50) for a vehicle-external server (300), the method (50) comprising the steps of:

- receiving (S51), from an electrically drivable vehicle (100a) designed as a commercial vehicle (100b), vehicle information (111) and position information (113), wherein the vehicle information (111) relates to the electrically drivable vehicle (100a, 100b), and wherein the position information (113) relates to a position (112) of the electrically drivable vehicle (100a, 100b);
- receiving route information (116) and load information (118) belonging to a route (121) from the electrically drivable vehicle (100a, 100b), wherein the load information (118) specifies a mass of the electrically drivable vehicle (100a, 100b);
- determining (S52) a target state of charge (114) on the basis of vehicle information (111), position information (113), route information (116) and load information (118); and
- transmitting (S53) the target charge level (114) to the electrically drivable vehicle (100a, 100b).

**13.** Method according to claim 12, wherein

- the vehicle information (111) includes a vehicle identifier (115), and wherein
- the target state of charge (114) is determined (S52) taking into account the following vehicle data (314) that can be determined by the server (300) using the vehicle identifier (115): vehicle type, vehicle mass, performance of an electric drive (21), model of a drive train, maximum charging capacity, charging power characteristic, efficiency chain, driving resistance coefficients, vehicle geometry data.

**14.** Method according to either of claims 12 or 13, wherein

- the target state of charge (114) is determined (S52) using a kinematic model (303) of the vehicle (100a, 100b).

**15.** Method according to any of claims 12 to 14, wherein

- the target state of charge (114) is determined (S52) taking into account routes and/or driving profiles that can be determined by the server (300) on the basis of the position information (113), on the basis of weather data (315), on the basis of traffic information, on the basis of other charging stations (200a, 200b) located in the vicinity (120) of the vehicle (100a, 100b).

**16.** Method according to any of claims 12 to 15, wherein

- the determination (S52) of the target charge level (114) is determined taking into account a specific scenario, wherein the scenario involves driving along a route with a gradient and at a speed.

**17.** Method according to any of claims 12 to 16, wherein the method comprises:

- determining (S52a) a route suggestion (117) and/or a load suggestion (119), and
- transmitting (S53a) the route suggestion (117) and/or the load suggestion (119) to the electrically drivable vehicle (100a, 100b).

**18.** Method according to claim 17, wherein

- the route suggestion (117) and/or the load suggestion (119) is determined (S52a) such that the determined target state of charge (114) leads to a state of charge (SoC) of an energy storage device (20) of the vehicle (100a, 100b) corresponding to a maximum charging capacity.

**19.** Method according to any of claims 12 to 18, wherein

- determining (S52) the target state of charge (114) is supported by artificial intelligence and/or takes into account a risk weighting factor.

**20.** Method according to any of claims 12 to 19, wherein the method comprises:

- determining and/or receiving (S54) fleet information (124) from a fleet management system (400), wherein
- the target state of charge (114) is determined (S52) taking into account the fleet information (124).

**21.** Computer program and/or computer-readable medium comprising instructions which, when the program or instructions are executed by a computer, cause the computer to perform the method (1, 50) and/or the steps of the method (1, 50) according to any of the preceding claims.

**22.** Control unit (14) for an electrically drivable vehicle (100a), which is designed as a utility vehicle (100b), comprising an energy storage device (20) and an electric drive (21) capable of regenerative braking (NB), wherein the energy storage device (20) can be charged during regenerative braking (NB) and the energy storage device (20) can be charged at a vehicle-external charging station (200), wherein the control unit (14) is configured to perform the method (1) according to any of claims 1 to 11.

**23.** Control unit (14) according to claim 22 for an electrically drivable vehicle (100a, 100b) wherein the control unit (14) comprises a vehicle interface (15), a data processing device (16) and a communication interface (17) for communicating with a vehicle-external server (300).

**24.** Control unit (14) according to claim 23, wherein the communication interface (17) comprises a mobile communication interface (1a).

**25.** Electrically drivable vehicle (100a), which is designed as a utility vehicle (100b), comprises an energy storage device (20) and an electric drive (21) capable of regenerative braking (NB) and comprises a control unit (14) according to any of claims 22 to 24, wherein the energy storage device (20) can be charged during regenerative braking (NB) and the energy storage device (20) can be charged at a vehicle-external charging station (200).

**26.** Vehicle-external server (300), wherein the vehicle-external server (300) is configured to perform the method (50) according to any of claims 12 to 20.

## Revendications

**1.** Procédé (1) pour un véhicule pouvant être entraîné électriquement (100a), lequel est réalisé sous forme de véhicule utilitaire (100b), comportant un dispositif d'accumulation d'énergie (20) et un entraînement électrique (21) capable d'effectuer un freinage régénératif (NB), dans lequel le dispositif d'accumulation d'énergie (20) peut être rechargé pendant un freinage régénératif (NB) et le dispositif d'accumulation d'énergie (20) peut être rechargé à une station de charge externe au véhicule (200), le procédé (1) présentant les étapes consistant à :

- déterminer (S1) un état de charge (110), dans lequel l'état de charge (110) comprend l'information indiquant si le dispositif d'accumulation d'énergie (20) est en cours de charge par la station de charge externe au véhicule (200) ;
- détecter (S2), en fonction de l'état de charge (110), une information de véhicule (111) concernant le véhicule (100a, 100b) et une information de position (113) concernant la position (112) du véhicule (100a, 100b) ;
- transmettre (S3) l'information de véhicule (111) et l'information de position (113) à un serveur externe au véhicule (300) ;
- transmettre (S3b) une information d'itinéraire (116) et une information de chargement (118) associée à un itinéraire (121) au serveur externe au véhicule (300), dans lequel l'information de chargement (118) indique une masse du véhicule (100a, 100b) ; et
- recevoir (S4) un état de charge cible (114) du serveur externe au véhicule (300), dans lequel l'état de charge cible (114) est déterminé sur la base de l'information de véhicule (111), de l'information de position (113), de l'information d'itinéraire (116) et de l'information de chargement (118).

**2.** Procédé selon la revendication 1, dans lequel

- la détection (S2) de l'information de véhicule (111) et de l'information de position (113) est effectuée lorsque le dispositif d'accumulation d'énergie (20) est chargé par la station de charge externe au véhicule (200).

**3.** Procédé selon la revendication 1 ou 2, dans lequel

- l'information de véhicule (111) comprend un identifiant de véhicule (115).

**4.** Procédé selon l'une des revendications précédentes, dans lequel le véhicule pouvant être entraîné électriquement (100a, 100b) comprend un tracteur (101) et une remorque (102), dans lequel :

- la transmission (S3) de l'information de véhicule (111) et de l'information de position (113) au serveur externe au véhicule (300) est effectuée respectivement du tracteur (101) et de la remorque (102) au serveur externe au véhicule (300), et/ou
- la transmission (S3) de l'information de véhicule (111) et de l'information de position (113) au serveur externe au véhicule (300) comprend une transmission (S3a) de la remorque (102) au tracteur (101) et du tracteur (101) au serveur externe au véhicule (300).

**5.** Procédé selon l'une des revendications précédentes, dans lequel le procédé présente en outre :

- la réception (S4a) d'une proposition d'itinéraire (117) et/ou d'une proposition de chargement (119) en provenance du serveur externe au véhicule (300).

**6.** Procédé selon la revendication 5, dans lequel

- la proposition d'itinéraire (117) et/ou la proposition de chargement (119) concordent avec l'état de charge cible (114).

**7.** Procédé selon la revendication 6, dans lequel le procédé présente en outre :

- la réception (S4b) d'une proposition d'itinéraire (117) incompatible et/ou d'une proposition de chargement (119) incompatible en provenance du serveur externe au véhicule (300), dans lequel le suivi de la proposition d'itinéraire (117) incompatible et/ou de la proposition de chargement (119) incompatible par le véhicule (100a, 100b) implique une limitation de la capacité de l'entraînement électrique (21) à effectuer un freinage régénératif (NB) ;
- la détermination (S7) de la capacité de l'entraînement électrique (21) à effectuer un freinage régénératif (NB) ;
- le déclenchement (S8) d'un avertissement et/ou d'une modification d'une consommation d'énergie en fonction de la capacité de l'entraînement électrique (21) à effectuer un freinage régénératif (NB).

**8.** Procédé selon la revendication 7, dans lequel le procédé présente :

- le déclenchement (S8) d'un avertissement d'une consommation d'énergie en fonction de la capacité de l'entraînement électrique (21) à effectuer un freinage régénératif (NB) ; dans lequel
- l'avertissement comprend une proposition d'itinéraire (117) adaptée en prenant en compte la position (112) du véhicule (100a, 100b), dans lequel la proposition d'itinéraire (117) est adaptée de telle sorte qu'une modification minimale d'une consommation d'énergie est nécessaire en fonction de la capacité de l'entraînement électrique (21) à effectuer un freinage régénératif (NB).

**9.** Procédé selon l'une des revendications précédentes, dans lequel le procédé présente en outre :

- la transmission (S5) d'une demande de charge (122) à la station de charge externe au véhicule (200).

**10.** Procédé selon l'une des revendications précédentes, dans lequel

- la transmission (S3) et la réception (S4) sont effectuées par l'intermédiaire d'une interface de téléphonie mobile (17a) côté véhicule.

**11.** Procédé selon l'une des revendications précédentes, dans lequel le procédé présente en outre :

- la réception (S4c) d'une pluralité d'états de charge cibles (114) en provenance du serveur externe au véhicule (300), dans lequel chacun des états de charge cibles (114) correspond à respectivement une parmi plusieurs stations de charge externes au véhicule (200) dans un environnement (120) du véhicule (100a, 100b).

**12.** Procédé (50) pour un serveur externe au véhicule (300), le procédé (50) présentant les étapes consistant à :

- recevoir (S51), en provenance d'un véhicule pouvant être entraîné électriquement (100a), lequel est réalisé sous forme de véhicule utilitaire (100b), une information de véhicule (111) et une information de position (113), dans lequel l'information de véhicule (111) concerne le véhicule pouvant être entraîné électriquement (100a, 100b), et dans lequel l'information de position (113) concerne une position (112) du véhicule pouvant être entraîné électriquement (100a, 100b) ;
- recevoir une information d'itinéraire (116) et une information de chargement (118) associée à un itinéraire (121) en provenance du véhicule pouvant être entraîné électriquement (100a, 100b), dans lequel l'information de chargement (118) indique une masse du véhicule pouvant être entraîné électriquement (100a, 100b) ;
- déterminer (S52) un état de charge cible (114) sur la base de l'information de véhicule (111), de l'information de position (113), de l'information d'itinéraire (116) et de l'information de chargement (118) ; et
- transmettre (S53) l'état de charge cible (114) au véhicule pouvant être entraîné électriquement (100a, 100b).

**13.** Procédé selon la revendication 12, dans lequel

- l'information de véhicule (111) comprend un identifiant de véhicule (115), et dans lequel
- la détermination (S52) de l'état de charge cible (114) est effectuée en prenant en compte les données de véhicule (314) suivantes pouvant être déterminées par le serveur (300) à l'aide de l'identifiant de véhicule (115) : type de véhicule, masse de véhicule, performances d'un entraînement électrique (21), modèle d'un groupe motopropulseur, capacité de charge maximale, caractéristique de puissance de charge, chaîne de rendement, coefficients de résistance au roulement, données géométriques de véhicule.

**14.** Procédé selon l'une des revendications 12 ou 13, dans lequel

- la détermination (S52) de l'état de charge cible (114) est effectuée à l'aide d'un modèle cinématique (303) du véhicule (100a, 100b).

**15.** Procédé selon l'une des revendications 12 à 14, dans lequel

- la détermination (S52) de l'état de charge cible (114) est effectuée en prenant en compte des voies et/ou des courbes de profil de conduite pouvant être déterminées par le serveur (300) à l'aide de l'information de position (113), à l'aide de données météorologiques (315), à l'aide d'une information routière, à l'aide d'autres stations de charge (200a, 200b) se trouvant dans un environnement (120) du véhicule (100a, 100b).

**16.** Procédé selon l'une des revendications 12 à 15, dans lequel

- la détermination (S52) de l'état de charge cible (114) est déterminée en prenant en compte un scénario particulier, dans lequel le scénario comprend la conduite le long d'une voie comportant une pente et à une certaine vitesse.

**17.** Procédé selon l'une des revendications 12 à 16, dans lequel le procédé présente :

- la détermination (S52a) d'une proposition d'itinéraire (117) et/ou d'une proposition de chargement (119), et
- la transmission (S53a) de la proposition d'itinéraire (117) et/ou de la proposition de chargement (119) au véhicule pouvant être entraîné électriquement (100a, 100b).

**18.** Procédé selon la revendication 17, dans lequel

- la détermination (S52a) de la proposition d'itinéraire (117) et/ou de la proposition de chargement (119) est effectuée de telle sorte que l'état de charge cible (114) déterminé conduit à un état de charge (SoC) correspondant à une capacité de charge maximale d'un dispositif d'accumulation d'énergie (20) du véhicule (100a, 100b).

**19.** Procédé selon l'une des revendications 12 à 18, dans lequel

- la détermination (S52) de l'état de charge cible (114) est assistée par une intelligence artificielle et/ou est effectuée en prenant en compte un facteur de pondération de risques.

**20.** Procédé selon l'une des revendications 12 à 19, dans lequel le procédé présente :

- la détermination et/ou la réception (S54) d'une information de flotte (124) en provenance d'un système de gestion de flotte (400), dans lequel
- la détermination (S52) de l'état de charge cible (114) est effectuée en prenant en compte l'information de flotte (124).

**21.** Programme informatique et/ou support lisible par ordinateur, comprenant des instructions qui, lors de l'exécution du programme ou des instructions par un ordinateur, amènent ce dernier à mettre en œuvre le procédé (1, 50) et/ou les étapes du procédé (1, 50) selon l'une des revendications précédentes.

**22.** Appareil de commande (14) pour un véhicule pouvant être entraîné électriquement (100a), lequel est réalisé sous forme de véhicule utilitaire (100b), comportant un dispositif d'accumulation d'énergie (20) et un entraînement électrique (21) capable d'effectuer un freinage régénératif (NB), dans lequel le dispositif d'accumulation d'énergie (20) peut être rechargé pendant un freinage régénératif (NB) et le dispositif d'accumulation d'énergie (20) peut être rechargé à une station de charge externe au véhicule (200), dans lequel l'appareil de commande (14) est configuré pour mettre en œuvre le procédé (1) selon l'une des revendications 1 à 11.

**23.** Appareil de commande (14) selon la revendication 22 pour un véhicule pouvant être entraîné électriquement (100a, 100b), dans lequel l'appareil de commande (14) présente une interface de véhicule (15), un dispositif de traitement de données (16) et une interface de communication (17) pour la communication avec un serveur externe au véhicule (300).

**24.** Appareil de commande (14) selon la revendication 23, dans lequel l'interface de communication (17) présente une interface de téléphonie mobile (1a).

**25.** Véhicule pouvant être entraîné électriquement (100a), lequel est réalisé sous forme de véhicule utilitaire (100b), comportant un dispositif d'accumulation d'énergie (20) et un entraînement électrique (21) capable d'effectuer un freinage régénératif (NB) et comportant un appareil de commande (14) selon l'une des revendications 22 à 24, dans lequel le dispositif d'accumulation d'énergie (20) peut être rechargé pendant un freinage régénératif (NB) et le dispositif d'accumulation d'énergie (20) peut être rechargé à une station de charge externe au véhicule (200).

**26.** Serveur externe au véhicule (300), dans lequel le serveur externe au véhicule (300) est configuré pour mettre en œuvre le procédé (50) selon l'une des revendications 12 à 20.

1
50
100a, 100b
200
300
400
S1
S2
111,113,115,116,118
S3, S3a, S3b, S51
124
S54
S52,S52a
114,117,119
S4a,S4b,S53,S53a
122
S5
S6
S7, S8

Fig. 1

100a,100b
120,121
112
101
102
14
14
16
123
16
15
15
21
NB
20
SoC
17,17a
17,17a
S6
122
111,113,115,116,118
114,117,119
200
300

Fig. 2

200
100a,100b
111,113,115,116,118
114,117,119
102
101
14
17,17a
16
15
22
25
21
23
15b
123
Fig. 3
307
400
306
315
314
316
124
302
303
304
318
305
114
111,113,116,118
301
312,111,113,116,118
110
Fig. 4

Rekuperationsleistung des elektrischen Antriebs [kW]
Ladeleistung der Energiespeichervorrichtung [kW]
500
511
(A)
80%
100%
SoC[%]
SoC [%]
501a
100%
X kWh
(B)
Zeit / Strecke
SoC [%]
503
501b
100%
(C)
90%
502
Zeit / Strecke
SoC [%]
Option1
501c
Option2
(D)
Zeit / Strecke
503
SoC [%]
100%
95%
501d
(E)
502
Zeit / Strecke

Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102020001782 A1
- JP 2018129973 A